(19)

Europäisches
Patentamt
European
Patent Office
Office européen
des brevets

(11)     EP 3 839 790 A1

(12)                    EUROPEAN PATENT APPLICATION
                    published in accordance with Art. 153(4) EPC

(43) Date of publication:
     23.06.2021 Bulletin 2021/25

(51) Int Cl.:
     G06F 21/62 (2013.01)

(21) Application number: 19849826.3

(22) Date of filing: 19.08.2019

(86) International application number:
     PCT/CN2019/101441

(87) International publication number:
     WO 2020/035075 (20.02.2020 Gazette 2020/08)

(84) Designated Contracting States:
     AL AT BE BG CH CY CZ DE DK EE ES FI FR GB
     GR HR HU IE IS IT LI LT LU LV MC MK MT NL NO
     PL PT RO RS SE SI SK SM TR
     Designated Extension States:
     BA ME
     KH MA MD TN

(30) Priority: 17.08.2018  CN 201810939380
                28.09.2018  CN 201811136436
                10.07.2019  CN 201910618274

(71) Applicant: The Fourth Paradigm (Beijing) Tech Co
     Ltd
     Beijing 100085 (CN)

(72) Inventors:
     • GUO, Xiawei
       Beijing 100085 (CN)
     • TU, Weiwei
       Beijing 100085 (CN)
     • YAO, Quanming
       Beijing 100085 (CN)
     • CHEN, Yuqiang
       Beijing 100085 (CN)
     • DAI, Wenyuan
       Beijing 100085 (CN)
     • YANG, Qiang
       Beijing 100085 (CN)

(74) Representative: Müller Hoffmann & Partner
     Patentanwälte mbB
     St.-Martin-Strasse 58
     81541 München (DE)

(54)     METHOD AND SYSTEM FOR CARRYING OUT MACHING LEARNING UNDER DATA PRIVACY
         PROTECTION

(57)     Provided are a method and system for carrying out machine learning under data privacy protection. The method comprises: acquiring a target data set comprising a plurality of target data records; acquiring a plurality of migration items regarding a source data set, wherein each of the plurality of migration items is used for migrating, under source data privacy protection, knowledge in a corresponding part of the source data set to the target data set; respectively using each of the plurality of migration items to obtain a first target machine learning model corresponding to each migration item, so as to obtain a plurality of first target machine learning models; and using the plurality of first target machine learning models to obtain a second target machine learning model, wherein in the process of obtaining the plurality of first target machine learning models and/or the process of obtaining the second target machine learning model, all or some of the plurality of target data records are used in a target data privacy protection mode.

100

| target data set acquisition device | migration item acquisition device | first target machine learning model obtaining device | second target machine learning model obtaining device |
| 110 | 120 | 130 | 140 |

FIG.1

EP 3 839 790 A1

**Description**

TECHNICAL FIELD

The invention generally relates to a data security technology in an artificial intelligence field, and more particularly, relates to a method and system for carrying out machine learning under data privacy protection, and a method and system for performing prediction using a machine learning model with data privacy protection.

BACKGROUND

As is well-know, machine learning often needs a large amount of data to mine valuable potential information from among the large amount of data by means of calculation. Although a huge amount of data has been produced with the development of information technology, in the current environment, people pay more and more attention to the privacy protection of data. This makes that even though there are a lot of data available for the machine learning in theory, different data sources are unwilling or unable to directly share their data with other data users in need because of the consideration of the privacy protection of their own data, so that the data available for the machine learning may still be insufficient, which leads to the failure to effectively mine information that can create more value based on more relevant data by using the machine learning. In addition, even though data containing privacy information has been obtained from other data sources or the agency itself has the data containing privacy information, the machine learning model trained based on these data may still leak the privacy information of the data.
In addition, although there are some modes for the privacy protection of the data, it is difficult to take into account both the data privacy protection and the subsequent availability of the privacy protected data, which leads to a poor effect of the machine learning.
In view of this, a technology that ensures the privacy information in the data is not leaked, and at the same time, effectively uses the data of different data sources for machine learning in the case of ensuring the subsequent availability of privacy protected data is needed.

SUMMARY

According to an exemplary embodiment of the present disclosure, a method for carrying out machine learning under data privacy protection is provided. The method may comprise: acquiring a target data set comprising a plurality of target data records; acquiring a plurality of migration items regarding a source data set, wherein each migration item among the plurality of migration items is used to migrate knowledge of a corresponding part of the source data set to the target data set under source data privacy protection; obtaining, by utilizing each migration item among the plurality of migration items respectively, a first target machine learning model corresponding to the each migration item, so as to obtain a plurality of first target machine learning models; obtaining a second target machine learning model by utilizing the plurality of first target machine learning models, wherein in a process of obtaining the plurality of first target machine learning models and/or a process of obtaining the second target machine learning model, all or a part of the plurality of target data records are utilized in a target data privacy protection mode.
According to another exemplary embodiment of the present disclosure, a method for performing prediction by utilizing a machine learning model with data privacy protection is provided. The method may comprise: acquiring the plurality of first target machine learning models and the second target machine learning model as described above; acquiring a prediction data record; dividing the prediction data records into a plurality of sub prediction data; performing prediction for each sub prediction data in each prediction data record, by utilizing the first target machine learning model corresponding to the each sub prediction data, to acquire a prediction result for the each sub prediction data; and inputting a plurality of prediction results corresponding to each prediction data record acquired by the plurality of first target machine learning models to the second target machine learning model to obtain a prediction result for the each prediction data record.
According to another exemplary embodiment of the present disclosure, a computer-readable storage medium for storing instructions is provided, wherein the instructions, when executed by at least one computing device, may cause the at least one computing device to perform a method for carrying out machine learning under data privacy protection as described above and/or the method for performing prediction by utilizing machine learning model with data privacy protection as described above.
According to another exemplary embodiment of the present disclosure, a system comprising at least one computing device and at least one storage device storing instruction is provided, wherein the instructions, when executed by the at least one computing device, may cause the at least one computing device to perform the method for carrying out machine learning under data privacy protection as described above and/or the method for performing prediction by utilizing machine learning model with data privacy protection as described above.

According to another exemplary embodiment of the present disclosure, a system for carrying out machine learning under data privacy protection is provided. The system may include: a target data set acquisition device, configured to acquire a target data set comprising a plurality of target data records; a migration item acquisition device, configured to acquire a plurality of migration items regarding a source data set, wherein each migration item among the plurality of migration items is used to migrate knowledge of a corresponding part of the source data set to the target data set under source data privacy protection; a first target machine learning model obtaining device configured to obtain, by utilizing each migration item among the plurality of migration items respectively, a first target machine learning model corresponding to the each migration item, so as to obtain a plurality of first target machine learning models; a second target machine learning model obtaining device configured to obtain a second target machine learning model by utilizing the plurality of first target machine learning models, wherein in at least one of a process of the first target machine learning model obtaining device obtaining the plurality of first target machine learning models and a process of the second target machine learning model obtaining device obtaining the second target machine learning model, all or a part of the plurality of target data records are utilized in a target data privacy protection mode.

According to another exemplary embodiment of the present disclosure, a system for performing prediction by utilizing a machine learning model with data privacy protection is provided. The system may include: a target machine learning model acquiring device configured to acquire the plurality of first target machine learning models and the second target machine learning model as described above; and a prediction data record acquisition device configured to acquire a prediction data record; a dividing device configured to divide the prediction data record into a plurality of sub prediction data; the prediction device configured to perform prediction for each sub prediction data among each prediction data record by utilizing the first target machine learning model corresponding to each sub prediction data, to acquire a prediction result for each sub prediction data, and input a plurality of prediction results corresponding to each prediction data record acquired by the plurality of first target machine learning models to the second target machine learning model to obtain a prediction result for each prediction data record.

According to an exemplary embodiment of the present disclosure, a method for carrying out machine learning under data privacy protection is provided. The method may comprise: acquiring a target data set; acquiring a migration item regarding a source data set, wherein the migration item is used to migrate knowledge of the source data set to the target data set in a source data privacy protection mode to train a target machine learning model on the target data set; and training the target machine learning model in combination with the migration item based on the target data set in a target data privacy protection mode.

According to another exemplary embodiment of the present disclosure, a computer-readable storage medium for storing instructions is provided, wherein the instructions, when executed by at least one computing device, cause the at least one computing device to perform the method for carrying out machine learning under data privacy protection as described above.

According to another exemplary embodiment of the present disclosure, a system comprising at least one computing device and at least one storage device storing instructions is provided, wherein the instructions, when executed by the at least one computing device, cause the at least one computing device to perform the method for carrying out machine learning under data privacy protection as described above.

According to another exemplary embodiment of the present disclosure, a system for carrying out machine learning under data privacy protection is provided. The system may comprise: a target data set acquisition device configured to acquire a target data set; a migration item acquisition device configured to acquire a migration item regarding a source data set, wherein the migration item is used to migrate knowledge of the source data set to the target data set in a source data privacy protection mode, to train a target machine learning model on the target data set; and a target machine learning model training device configured to train the target machine learning model in combination with the migration items based on the target data set, in a target data privacy protection mode.

The method and system for carrying out machine learning under data privacy protection according to the exemplary embodiment of the present disclosure may not only realize the privacy protection of the source data and the target data, and at the same time, may migrate the knowledge in the source data set to the target data set, and thus it is possible to train the target machine learning model with better model effect in combination with the migrated knowledge based on the target data set.

The method and system for carrying out machine learning in the data privacy protection mode according to the exemplary embodiment of the present disclosure may not only ensure that the data privacy information is not leaked, and at the same time, may effectively utilize the data of different data sources for machine learning in the case that the availability of the privacy protected data is ensured, thereby making the effect of the machine learning model better.

BRIEF DESCRIPTION OF THE DRAWINGS

These and/or other aspects and advantages of the invention will become clearer and easier to understand, from among the following detailed description of the embodiments of the invention in conjunction with the accompanying drawings, wherein:

FIG. 1 is a block diagram showing a system for carrying out machine learning under data privacy protection according to an exemplary embodiment of the present disclosure;

FIG. 2 is a flow chart showing a method for carrying out the machine learning in a data privacy protection mode according to an exemplary embodiment of the present disclosure;

FIG. 3 is a schematic diagram showing the method for carrying out the machine learning in the data privacy protection mode according to the first exemplary embodiment of the present disclosure;

FIG. 4 is a schematic diagram showing the method for carrying out the machine learning in the data privacy protection mode according to a second exemplary embodiment of the present disclosure;

FIG. 5 is a schematic diagram showing the method for carrying out the machine learning in the data privacy protection mode according to a third exemplary embodiment of the present disclosure;

FIG. 6 is a schematic diagram showing the method for carrying out the machine learning in the data privacy protection mode according to a fourth exemplary embodiment of the present disclosure;

FIG. 7 is a schematic diagram showing a conception of carrying out the machine learning in the data privacy protection mode according to an exemplary embodiment of the present disclosure;

FIG. 8 is a block diagram showing a system for carrying out machine learning under data privacy protection according to an exemplary embodiment of the present disclosure;

FIG. 9 is a flow chart showing a method for carrying out the machine learning in the data privacy protection mode according to an exemplary embodiment of the present disclosure;

FIG. 10 is a schematic diagram showing a conception of carrying out the machine learning in the data privacy protection mode according to an exemplary embodiment of the present disclosure.

DETAILED DESCRIPTION

In order to enable those skilled in the art to better understand the invention, the exemplary embodiments of the invention are further described in detail in conjunction with the drawings and specific embodiments. It needs to be explained here that the words "and/or", "and/or" appearing in the present disclosure all means containing three parallel cases. For example, "including A and/or B" means including at least one of A and B, that is, including the following three parallel cases: (1) including A; (2) including B; (3) including A and B. Similarly, "including A, B and/or C" means including at least one of A, B and C. For another example, "performing step 1 and/or step 2" means performing at least one of step 1 and step 2, that is, means the following three parallel cases: (1) performing step 1; (2) performing step 2; (3) performing step 1 and step 2.

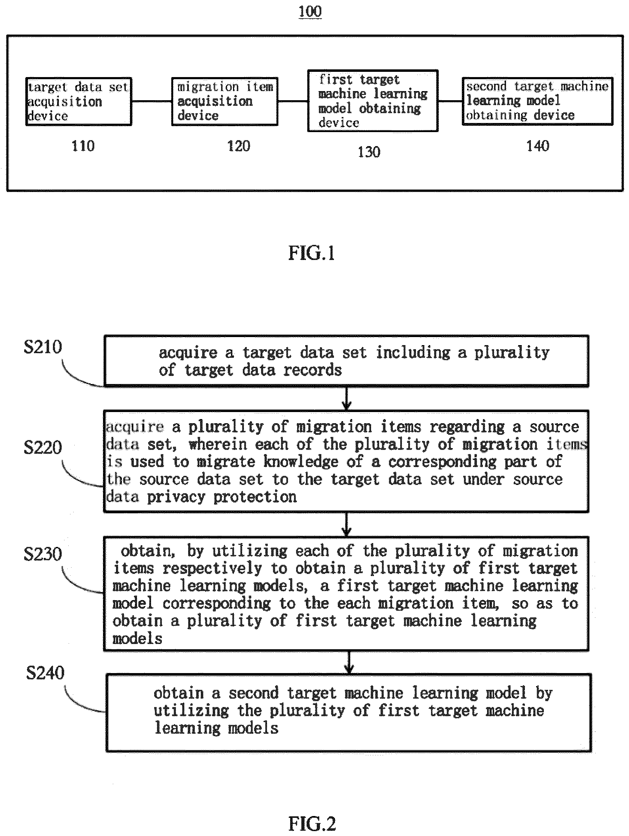

FIG. 1 is a block diagram showing a system 100 (hereinafter for convenience of description, referred to as a "machine learning system" for short) for carrying out machine learning under data privacy protection according to an exemplary embodiment of the present disclosure. Referring to FIG. 1, the machine learning system 100 may include a target data set acquisition device 110, a migration item acquisition device 120, a first target machine learning model obtaining device 130, and a second target machine learning model obtaining device 140.

Specifically, the target data set acquisition device 110 may acquire target data set including a plurality of target data records. Here, the target data set may be any data set that may be used for training of a machine learning model, and, alternatively, the target data set may also include label(s) of the target data records with respect to a machine learning target (prediction target). For example, the target data record may include a plurality of data attribute fields (for example, user ID, age, gender, historical credit record, etc.) reflecting various attributes of an object or an event, and the label(s) of the target data record with respect to the machine learning target may be, for example, whether the user has a capability of repaying the loan, whether the user accepts the recommended content, etc., but not limited thereto. Here, the label(s) of the target data record with respect to the machine learning target is not limited to the label of the target data record with respect to one machine learning target, but may include the label(s) of the target data record with respect to one or a plurality of machine learning targets, that is, one target data record is not limited to corresponding to one label, but may correspond to one or a plurality of labels. In addition, the target data set may involve various personal privacy information that users do not expect to be known by others (for example, user's name, ID card number, mobile phone number, total property, loan record, etc.), and may also include other related information that does not involve personal privacy. Here, the target data records may come from different data sources (for example, network operators, banking institutions, medical institutions, etc.), and the target data set may be used by specific institutions or organizations in case of obtaining the authorization of users, but it is often expected that the information related to personal privacy will not be further known by other organizations or individuals. It needs to be explained that in the present disclosure, "privacy" may generally refer to any attribute involving a single individual.

As an example, the target data set acquisition device 110 may acquire the target data set from the target data source once or in batches, and may acquire the target data set manually, automatically or semi-automatically. In addition, the target data set acquisition device 110 may acquire the target data records and/or the labels of the target data records with respect to the machine learning targets in the target data set in real time or offline, and the target data set acquisition device 110 may simultaneously acquire the target data records and the labels of the target data records with respect to the machine learning targets, or the time of acquiring the labels of the target data records with respect to the machine learning targets may lag behind the time of acquiring the target data records. In addition, the target data set acquisition device 110 may acquire the target data set from the target data source in an encrypted form or directly utilize the target data set that have been stored therein locally. If the acquired target data set is encrypted data, alternatively, the machine learning system 100 may also include a device for decrypting the target data and may also include a data processing device for processing the target data into a form suitable for the current machine learning. It needs to be explained that the present disclosure does not put limits on the type, form, content of the target data record and the label(s) thereof in the target data set, acquisition way of the target data set, etc., and all the data available for machine learning that be obtained by any means may be used as the above-mentioned target data set.

However, as described in the background technology of the present disclosure, as for the machine learning in which more valuable information is expected to be mined, in practice, only based on the acquired target data set may not be enough to learn a machine learning model that meets the actual task requirements or achieves a predetermined effect. Therefore, the related information from other data sources may be tried to be acquired, so as to migrate the knowledge from other data sources to the target data set, thereby combining the target data set with the knowledge from other data sources for machine learning, and further improving the effect of machine learning model. But, the premise of migration is to ensure that: the privacy information involved in the data set of other data source (in the present disclosure, may be referred to as "source data set") is not leaked, that is, the source data needs to be privacy protected.

To this end, according to an exemplary embodiment of the present disclosure, the migration item acquisition device 120 may acquire a plurality of migration items about the source data set. Specifically, each migration item of the plurality of migration items may be used to migrate the knowledge of a corresponding part of the source data set to the target data set under source data privacy protection. Here, the corresponding part of the source data set may refer to a part of the data sets corresponding to each migration item, that is to say, each migration item is only used to migrate the knowledge of a part of the source data set corresponding to the each migration item to the target data set in a source data privacy protection mode, and finally, the knowledge of the whole source data set is migrated to the target data set through the plurality of migration items. Specifically, each migration item may be any information related to the knowledge contained in a part of the source data set corresponding to the migration item obtained in the case of the source data is privacy protected (i.e., in the source data privacy protection mode). The present disclosure does not limit the specific content and form of each migration item, as long as it can migrate the knowledge of the corresponding part of the source data set to the target data set in the source data privacy protection mode. For example, each migration item may involve samples of the corresponding part of the source data set, features of the corresponding part of the source data set, a model obtained based on the corresponding part of the source data set, an objective function for training model based on the corresponding part of the source data set, and statistical information about the corresponding part of the source data set, etc..

According to the exemplary embodiment, the corresponding part of the source data set may be the corresponding source data subset obtained by dividing the source data set according to a data attribute field. Similar to the target data set, the source data set may include a plurality of source data records and alternatively, may also include a label of each source data record with respect to the machine learning target. In addition, similar to the target data records, each source data record may also include a plurality of data attribute fields reflecting various attributes of the object or event (for example, user ID, age, gender, historical credit record, historical loan record, etc.).Here, "dividing according to data attribute field" may refer to grouping a plurality of data attribute fields included in each source data record included in the source data set, so that each data record after dividing (i.e., each sub data record obtained after dividing) may include at least one data attribute field, and a set composed of data records with the same data attribute field is the corresponding source data subset obtained by dividing the source data set according to data attribute field. That is, here, each data record in the corresponding source data subset may include the same data attribute field(s), and data attribute field(s) included in each data record may be one or more. In addition, the number of data attribute field(s) included in the data record in the different source data subsets may be the same or different. For example, as described above, assuming that each source data record may include the following five data attribute fields: user ID, age, gender, historical credit record and historical loan record, the five data attribute fields may be, for example, divided into three data attribute field groups, therein for example, the first data attribute field group may include two data attribute fields which are the user ID and the age, the second data attribute field group may include two data attribute fields which are the gender and the historical credit record, and the third data attribute field group may include one data attribute field which is the historical loan record. In this case, the corresponding source data subset obtained by dividing the source data set according to data attribute fields may be a first source data subset composed of data records including data attribute fields in the first data attribute field group, a second source data subset composed of data records including data attribute fields in the second data attribute field group, or a third source data subset composed of data records including data attribute fields in the third data attribute field group. The dividing way of the source data set is explained above in conjunction with the example. However, it is clear to those skilled in the art that neither the number and content of the data attribute fields included in the source data record nor the specific dividing way of the source data set are limited to the above example.

As an example, the migration item acquisition device 120 may receive a plurality of migration items about the source data set from the outside. For example, the migration item acquisition device 120 may acquire the migration items described above from an entity that owns the source data set or an entity authorized to perform related processing on the source data set (for example, a service provider that provides machine learning related service). In this case, each migration item may be obtained by the entity that owns the source data set or the entity authorized to perform related processing on the source data set by performing machine learning related processing based on the corresponding source data subset described above, and the obtained migration items may be transmitted to the migration item acquisition device 120 by these entities.

Different from acquiring the migration items directly from the outside, alternatively, the migration item acquisition device 120 may also obtain the plurality of migration items about the source data set by performing machine learning related processing on the source data set. Here, the acquisition and use of the source data set by the migration item acquisition device 120 may be authorized or protected, so that the migration item acquisition device 120 can accordingly process the acquired source data set. Specifically, the migration item acquisition device 120 may first acquire the source data set including a plurality of source data records. Here, the source data set may be any data set related to the target data set. Accordingly, the above description on the composition of the target data set and the acquisition way of the target data set are applicable to the source data set, and will not be repeated here. In addition, according to an exemplary embodiment, the source data record and the target data record may include the same data attribute fields. In addition, although the source data set is described to be acquired by the migration item acquisition device 120 for the convenience of description, it needs to be explained that the operation of acquiring the source data set may also be performed by the target data set acquisition device 110, or the above two may jointly acquire the source data set, which is not limited by the present disclosure. In addition, the acquired target data set, the source data set, and the migration item may be stored in a storage device (not shown) of the machine learning system. As an alternative, the target data, source data or migration item stored above may be isolated physically or with access rights to ensure the safe use of the data.

In the case of acquiring the source data set, in consideration of the privacy protection, the machine learning system 100 cannot directly utilize the acquired source data set together with the target data set for machine learning, but the source data may only be used for the machine learning in the case that it is ensured to be privacy protected. To this end, the migration item acquisition device 120 may acquire the plurality of migration items about the source data set by performing machine learning related processing on the source data set in the source data privacy protection mode. Specifically, according to the exemplary embodiment, the migration item acquisition device 120 may divide the source data set into a plurality of source data subsets according to the data attribute field, and train a source machine learning model corresponding to each source data subset for the first prediction target based on the each source data subset in the source data privacy protection mode, and use a parameter of each trained source machine learning model as the migration item related to the each source data subset. Here, data records in each source data subset may include at least one data attribute field. Since the way of dividing the source data set according to the data attribute field has been explained above in conjunction with the example, it will not be repeated here.

Here, it needs to be explained that, alternatively, the source data set may include not only the plurality of source data records, but also the labels of the source data records with respect to the machine learning target. In the case that the source data set includes the source data records and the labels of the source data records with respect to the machine learning target, the above-mentioned dividing the source data set according to the data attribute field is only limited to dividing the source data records in the source data set according to the data attribute field, but not dividing the labels of the source data records with respect to the machine learning target included in the source data set. And, the label of each data record (including at least one data field) obtained by dividing each source data record, with respect to the machine learning target is still the label of the source data record before being divided with respect to the machine learning target. Accordingly, here, training the source machine learning model corresponding to each source data subset for the first prediction target may be training the source machine learning model corresponding to each source data subset based on each source data subset (that is, each data record included in each source data subset and its corresponding label), and the label of each data record for the first prediction target is the label of the source data record for the first prediction target. As an example, the first prediction target may be predicting whether a transaction is a fraudulent transaction, predicting whether a user has the ability to repay the loan, etc., but not limited herein.

In addition, it needs to be explained that although the parameter of each trained source machine learning model is used as the migration item related to each source data subset as above, this is only an example. In fact, the migration item related to each source data subset may be any information related to the knowledge contained in the source data subset, which is obtained in the source data privacy protection mode. Specifically, according to an exemplary embodiment of the present disclosure, the migration item related to each source data subset may involve a model parameter, an objective function, and/or statistical information about the data in the source data subset, obtained in the process of performing the machine learning related processing based on the source data subset, but not limited herein. In addition, in addition to training the source machine learning model corresponding to each source data subset based on each source data subset in the source data privacy protection mode described above, the operation of performing the machine learning related processing based on the source data subset may include machine learning related processing, for example, performing feature processing or data statistical analysis for the source data subset, etc.. In addition, it should be explained that all of the above-described model parameter, objective function and/or statistical information about the source data subset may be the above information itself obtained directly in the process of performing the machine learning related processing based on the source data subset, or may be the information obtained after performing further transformation or processing on these information, and the disclosure has no limitation on this. As an example, the migration item involving the model parameter may be the parameter of the source machine learning model or the statistical information of the parameter of the source machine learning model, etc., but not limited to this. As an example, the objective function involved in the migration item may refer to the objective function constructed for training the source machine learning model. In the case that the parameter of the source machine learning model itself is not migrated, the objective function may not be actually solved separately, but the disclosure is not limited to this. As an example, the migration item involving statistical information about the source data subset may be data distribution information and/or data distribution change information about the source data subset obtained in the source data privacy protection mode, but not limited to this.

According to the exemplary embodiment, the source data privacy protection mode may be a protection mode conforming to differential privacy definition, but not limited to this, and may be any privacy protection mode able for privacy protection of the source data, which has already existed or may appear in the future.

For the convenience of understanding, the protection mode conforming to the differential privacy definition is briefly described now. Assuming that there is a random mechanism M (for example, M is a training process of the machine learning model). For M, the probability that the outputs in the case of any two input data sets $D_1$ and $D_2$ that differ by only one sample are equal to t is $Pr(M(D_1) = t)$ and $Pr(M(D_2) = t)$, and if the following equation 1 is satisfied (where, $\in$ is a privacy budget), it may be considered that M satisfies $\in$ differential privacy protection for any input.

$$\left| \ln \frac{Pr(M(\mathcal{D}_1) = t)}{Pr(M(\mathcal{D}_2) = t)} \right| \leq \epsilon \qquad \text{......equation 1}$$

In the above equation 1, the smaller the $\in$, the better the degree of the privacy protection, and on the contrary, the degree of the privacy protection is worse. The specific value of $\in$ may be set accordingly according to the requirement of the user for the degree of the data privacy protection. Assuming that there is a user, for him, whether to input his personal data to mechanism M (assuming that the data set before the personal data is input is $D_1$, the data set after personal data is input is $D_2$, $D_2$ and $D_1$ differ only by the personal data) has very little effect on the output (where the effect is defined by the size of $\in$), then it may be considered that M plays a protective role in his privacy. Assuming $\in=0$, then whether the user inputs his own data to M has no effect on the output of M, so the privacy of the user is completely protected.

According to an exemplary embodiment, the source data privacy protection mode may be to add random noise in the process of training the source machine learning model as described above. For example, the random noise may be added, so that the above differential privacy protection definition is followed. But, it needs to be explained that the definition about the privacy protection is not only limited to such a differential privacy protection definition, but may be other definition modes about the privacy protection, for example, K-anonymization, L-diversification, T- closeness, etc.

According to an exemplary embodiment, the source machine learning model may be, for example, a generalized linear model, for example, a logistic regression model, but not limited to this. In addition, in the source data privacy protection mode, the migration item acquisition device 120 may construct the objective function for training the source machine learning model to at least include a loss function and a noise term. Here, the noise term may be used to add the random noise in the process of training the source machine learning model, so that the privacy protection for the source data may be realized. In addition, in addition to the loss function and the noise term, the objective function for training the source machine learning model may be constructed to include other constraint terms for constraining the model parameters, for example, may also be constructed to include a regularization term for preventing over fitting phenomenon of the model or over complexity of the model parameters, a compensation term for the privacy protection, etc.

In order to facilitate a more intuitive understanding of the above described process of training the source machine learning model corresponding to each source data subset for the first prediction target based on each source data subset in the source data privacy protection mode, the process will be further explained below. For the convenience of description, here, it is assumed that the source data privacy protection mode is the protection mode conforming to the differential privacy definition, and the source machine learning model is the generalized linear model.

Specifically, assuming that the data set $D = \{(x_1, y_1), \ldots, (x_n, y_n))\}$, wherein $x_i$ is a sample, $y_i$ is a label of the sample (i.e, a label of $x_i$ for a prediction target), $\mathbf{x}_i \in \mathbb{R}^d$, $i \in \{1, ..., n\}$, wherein n is the number of samples in the dataset and d is the dimension of the sample space, $\mathbb{R}^d$ is a d-dimensional sample space. In addition, it is assumed that a data attribute field set $S_G$ included in the data records in the data set is divided into k non-overlapping data attribute field groups $G_1, G_2, \cdots, G_K$ (i.e, $S_G = \{G_1, \cdots, G_K\}$), wherein at least one data attribute field is included in each group $G_k$. Under the above assumptions, the machine learning model corresponding to each data subset may be trained by the following process:

For each $k$ (wherein $k = 1, \cdots, K$), the following operations are * performed to obtain $\mathbf{w}_k^*$:

1. Let 
$$\epsilon' = \epsilon - \sum_{k=1}^{K} \log\left(1 + \frac{2cq_k^2}{n\lambda_k} + \frac{c^2 q_k^4}{n^2 \lambda_k^2}\right)$$
, wherein $q_k$ is a scaling constant (specifically, it is a upper bound of two norm for limiting the samples in each data subset), and a scaling constant set $\{q_k\}_{k=1}^{K}$ needs to satisfy $\sum_{k=1}^{K} q_k = 1$, c is a constant, $\lambda_k$ is a constant set, $\epsilon$ is a privacy budget in the above equation 1;

2. For $G_k \in S_G$, $G_k(D)$ is obtained, wherein $G_k(D)$ represents a data subset formed by extracting the data attribute fields which belong to $G_k$ among the data set $D$, in which each data record includes the data attribute fields in $G_k$. That is to say, $G_k(D)$ is a k-th data subset obtained by dividing data set $D$ according to data attribute field;

3. If $\epsilon' > 0'$, $\Delta = 0$, otherwise, 
$$\Delta = \frac{cq_k^2}{n(\exp((q_k \epsilon)/4) - 1)} - \lambda_k$$
, and $\epsilon' = \epsilon/2$;

4. Samples included in the data subset $G_k(D)$ are scaled, so that $\|x_i\| \le q_k$ is satisfied for any $x_i \in G_k(D)$;

5. b is sampled from density function 
$$h(\mathbf{b}) \propto e^{-\frac{\epsilon'}{2}\|\mathbf{b}\|}$$
, specifically, two norm ‖b‖ of b is sampled from a gamma distribution $\Gamma(d, \frac{2}{\epsilon})$ at first, and then b = ‖b‖u may be obtained based on a direction u of b being sampled uniformly and randomly.

6. The machine learning model corresponding to the data subset $G_k(D)$ is trained for the prediction target by utilizing equation 2, based on the data subset $G_k(D)$, in the data privacy protection mode:

$$\mathbf{w}_k^* = \arg\min_{\mathbf{w}} \frac{1}{n} \sum_{\mathbf{x}_i \in G_k(D)} \ell(\mathbf{w}^T \mathbf{x}_i, y_i) + \lambda_k g_k(\mathbf{w}) + \frac{\mathbf{b}^T \mathbf{w}}{n} + \frac{1}{2}\Delta\|\mathbf{w}\|^2$$

equation 2

Wherein, in equation 2, w is the parameter of the machine learning model, $\ell(\mathbf{w}^T x_i, y_i)$ is the loss function, $g_k(\mathbf{w})$ is a regularization function, $\dfrac{\mathbf{b}^T \mathbf{w}}{n}$ is the noise term for adding random noise in the process of training machine learning model to implement data privacy protection, $\dfrac{1}{2}\Delta\|\mathbf{w}\|^2$ is the compensation term for privacy protection, $\lambda_k$ is a constant for controlling regularization intensity, $\dfrac{1}{n}\sum_{\mathbf{x}_i \in G_k(D)} \ell(\mathbf{w}^T \mathbf{x}_i, y_i) + \lambda g_k(\mathbf{w}) + \dfrac{\mathbf{b}^T \mathbf{w}}{n} + \dfrac{1}{2}\Delta\|\mathbf{w}\|^2$ is the constructed objective function for training the k-th machine learning model. According to the above equation 2, w value when the value of the objective function is minimum is the finally solved parameter $\mathbf{w}_k^*$ of the k-th machine learning model. The mechanism for solving the parameter of the machine learning model according to the process described above may be defined as $A_2$. It needs to be explained that $A_2$ may be not only used to solve the parameter of the source machine learning model, but also used to solve the parameter of the target machine learning model.

To make $\mathbf{w}_k^*$ solved according to the above equation 2 satisfy $\in$ differential privacy definition, the following predetermined conditions are needed to be satisfied: the regularization function $g_k(\mathbf{w})$ needs to be a 1-strong convex function and doubly differentiable, secondly, the loss function needs to satisfy $|\ell'(z)| \leq 1$ and $|\ell''(z)| \leq c$ for all z, wherein $\ell'(z)$ and $\ell''(z)$ are the first derivative and the second derivative of the loss function, respectively. That is to say, the parameter of the machine learning model that satisfies the differential privacy protection may be obtained by the above equation 2, as long as it's the generalized linear model that satisfies the above conditions.

For example, for the logistic regression model, its loss function $\ell(\mathbf{w}^T\mathbf{x},y) = \log(1 + e^{-y\mathbf{w}^T\mathbf{x}})$, if let the constant c equal to 1/4, the regularization function $g_k(\mathbf{w}) = \frac{1}{2}\|\mathbf{w}\|^2$, the regularization function $g_k(\mathbf{w})$ satisfies to be a 1-strong convex function and doubly differentiable, and the loss function satisfies $|\ell'(z)| \leq 1$ and $|\ell''(z)| \leq c$ for all z. Therefore, when the source machine learning model is the logistic regression model, the parameter of the source machine learning model may be solved by utilizing the above-described mechanism $A_2$ for solving the parameter of the machine learning model. Specifically, the regularization function of each source machine learning model may be set to be equal to $\frac{1}{2}\|\mathbf{w}\|^2$, that is, for $k \in \{1, \cdots, K\}$, let the regularization function $g_{sk}(\mathbf{w}) = \frac{1}{2}\|\mathbf{w}\|^2$ (here $g_{sk}(\mathbf{w})$ is $g_k(\mathbf{w})$ in the above equation 2).In this case, the parameters of K source machine learning models may be finally solved by utilizing the mechanism $A_2$ for solving the parameter $\mathbf{w}_k^*$ of the machine learning model described above

$$\{\mathbf{w}_1^*, \cdots, \mathbf{w}_K^*\} = A_2(\mathcal{D}_s, \epsilon_s, S_G, \{\lambda_{sk}, g_{sk}, q_{sk}\}_{k=1}^K)$$, wherein $D_s$ is the source data set, $\epsilon_s$ is the privacy budget of source data privacy protection mode, $S_G$ is the set of data attribute fields included in each source data record, $\{\lambda_{sk}, g_{sk}, q_{sk}\}_{k=1}^K$ is a set of the constant for controlling regularization intensity $\lambda_{sk}$ (i.e., $\lambda_k$ in the above equation 2), the regularization function $g_{sk}$ (i.e., $gk(\mathbf{w})$ in the above equation 2) and the scaling constant $q_{sk}$ (i.e., $q_k$ described above). The parameter of the source machine learning model corresponding to each source data subset solved according to the above mechanism $A_2$ not only satisfies the privacy protection of the source data, but also carry the knowledge of the corresponding source data subset. Then, the parameter of each trained source machine learning model may be used as the migration item related to each source data subset to migrate the knowledge of the source data subset to the target data set.

As described above, since the corresponding source machine learning model is trained for each source data subset to acquire the migration item after the source data set is divided according to the data attribute field, rather than the source machine learning model is trained for the entire source data set to acquire the migration item, the random noise added in the training process may be effectively reduced, so that the parameter of the source machine learning model corresponding to each source data subset trained according to the above way (as the migration item related to each source data subset) not only realize the protection to the privacy information in the corresponding source data subset, and at the same time, can ensure the availability of the migration item.

It needs to be explained that although the process of solving the parameter of the source machine learning model is introduced above by taking the generalized linear model (for example, the logistic regression model) as an example, in fact, as long as the source machine learning model is the linear model which satisfies the above mentioned restrictions on the regularization function and the loss function, equation 2 may be utilized to solve the parameter of the source machine learning model as the migration item.

After the migration item acquisition device 120 acquires a plurality of migration items about the source data set, the first target machine learning model obtaining device 130 may obtain, by utilizing each migration item of the plurality of migration items respectively, a first target machine learning model corresponding to the each migration item, so as to obtain a plurality of first target machine learning models. Specifically, as an example, the first target machine learning model obtaining device 130 may directly use each migration item as the parameter of the first target machine learning model corresponding to the each migration item without using the target data set (for convenience of description, hereinafter, this mode to obtain the first target machine learning model is referred to as a "direct obtaining mode of the first target machine learning model " for short). That is, it is assumed that the parameters of the plurality of first target machine learning models are $\mathbf{u}_1^*, \cdots, \mathbf{u}_K^*$ respectively, then the first target machine learning model and the source machine learning model may be set to be the same type of machine learning model, and can let $\mathbf{u}_1^* = \mathbf{w}_1^*, \ldots, \mathbf{u}_K^* = \mathbf{w}_K^*$ directly, so that the first target machine learning model corresponding to each migration item is obtained.

Alternatively, the first target machine learning model obtaining device 130 may obtain the first target machine learning model corresponding to each migration item in the following way (for convenience of description, hereinafter, the way to obtain the first target machine learning model is referred to as an " obtaining mode of the first target machine learning model through training" for short). Specifically, the first target machine learning model obtaining device 130 may first divide the target data set or the first target data set into a plurality of first target data subsets in the same way as dividing the source data set, according to the data attribute field, and then train, in combination with the migration item related to the source data subset corresponding to each first target data subset, the first target machine learning model corresponding to the migration item for a second prediction target, based on each first target data subset, in the target data privacy protection mode.

Here, the first target data set may include a part of the target data records included in the target data set, and data records included in each first target data subset and the source data subset corresponding to the first target data subset may include the same data attribute fields. As described above, the target data record and the source data record include the same data attribute fields, in this case, the target data set or the first target data set may be divided into a plurality of first target data subsets in the same way as dividing the source data set, according to the data attribute field. For example, like the example of the source data record described above, assuming that each target data record also includes the following five data attribute fields: user ID, age, gender, historical credit record and historical loan record, the target data set or the first target data set may be divided in the same dividing way as the exemplary dividing way of dividing the source data record described above. Specifically, the five data attribute fields are also divided into three data attribute field groups, wherein, for example, the first data attribute field group may include two data attribute fields that are the user ID and the age, the second data attribute field group may include two data attribute fields that are the gender and the historical credit record, and the third data attribute field group may include one data attribute field that is the historical loan record. In this case, a plurality of first target data subsets obtained by dividing the target data set or the first target data set according to data attribute field may be a first target data subset composed of data records including the data attribute fields in the first data attribute field group, a first target data subset composed of data records including the data attribute fields in the second data attribute field group, and a first target data subset composed of data records including the data attribute field in the third data attribute field group. In this case, for example, the source data subset corresponding to the above first target data subset is the first source data subset mentioned when describing the dividing of the source data set, and the data records in the first target data subset and the first source data subset include the same data attribute fields (that is, both of them include two data attribute fields that are the user ID and the age), and so on.

According to the exemplary embodiment, the above described target data privacy protection mode may be the same as the source data privacy protection mode, for example, it may also be the protection mode conforming to the differential privacy definition, but not limited to this. In addition, the first target machine learning model may belong to the same type of machine learning model as the source machine learning model. For example, the first target machine learning model may also be the generalized linear model, for example, a logistic regression model, but not limited to this, for example, it may be any linear model satisfying the predetermined conditions. It needs to be explained that the target data privacy protection mode here may also be different from the source data privacy protection mode, and the first target machine learning model may also belong to different type of machine learning model with the source machine learning model, which are not limited in this application.

In addition, according to the exemplary embodiment, the above target data privacy protection mode may be to add random noise in the process of obtaining the first target machine learning model. As an example, in the target data privacy protection mode, the first target machine learning model obtaining device 130 may construct the objective function for training the first target machine learning model to at least include a loss function and a noise term. In addition to constructing the objective function to at least include the loss function and the noise term, the first target machine learning model obtaining device 130 may construct the objective function for training the first target machine learning model to at least include the loss function and the noise term, and reflect the difference value between the parameter of the first target machine learning model and the migration item corresponding to the first target machine learning model, and then, the first target machine learning model obtaining device 130 may train, in combination with the migration item related to the source data subset corresponding to each first target data subset, the first target machine learning model corresponding to the migration item for the second prediction target by solving the constructed objective function based on the each first target data subset in the target data privacy protection mode. By reflecting the difference value between the parameter of the first target machine learning model and the migration item corresponding to the first target machine learning model in the objective function for training the first target machine learning model, the knowledge in the source data subset corresponding to the migration item may be migrated to the target data set, so that the training process may jointly use the knowledge on the source data set and target data set, and therefore, the effect of the trained first target machine learning model is better.

It needs to be explained that here, the second prediction target and the first prediction target for which the source machine learning model is trained described above may be same (for example, both of them are to predict whether the transaction is fraudulent transaction) or similar (for example, the first prediction target may be to predict whether the transaction is fraudulent transaction, and the second prediction target may be to predict whether the transaction is suspected of illegal). In addition, according to the actual needs, the above objective function may also be constructed to include a regular term for preventing the over fitting phenomenon of the trained first target machine learning model, or may also be constructed to include other constraint terms according to the actual task needs, for example, a compensation term for the privacy protection, and the present application is not limited to this, as long as the constructed objective function can effectively implement the privacy protection of the target data, and at the same time, can migrate the knowledge on the corresponding source data subset to the target data set.

Hereinafter, in order to understand the above content more intuitively, the above described process of the first target machine learning model obtaining device 130 training the first target machine learning model corresponding to each migration item will be further described.

Here, for the convenience of description, it is assumed that the source machine learning model is the logistic regression model, the first target machine learning model is the generalized linear model, and the target data privacy protection mode is the protection mode conforming to the differential privacy protection definition.

First, the target dataset $D_t$ or a first target data set $D_{t1}$ (wherein $D_{t1}$ is the target data set including a part of target data records included in $D_t$, for example, all the target data records in $D_t$ are divided into the first target data set $D_{t1}$ and a second target data set $D_{t2}$ according to the ratio of 1:1-p) is divided into a plurality of first target data subsets in the same way as dividing the source data set, according to the data attribute field. As described above, the data attribute field set included in the source data record is divided into k non-overlapping data field groups $G_1$, $G_2$, $\cdots$, $G_K$, and similarly, the data attribute field set included in the target data record may also be $S_G$, and $S_G = \{G_1, \cdots, G_K\}$.

Secondly, for each $k = \{1, \cdots, K\}$, the regularization function in the objective function for training the k-th first target machine learning model may be set as follows:

$$g_{tk}(\mathbf{u}) = \frac{\eta_k}{2}\|\mathbf{u}\|^2 + \frac{1-\eta_k}{2}\|\mathbf{u} - \mathbf{w}_k^*)\|$$

Equation 3

Wherein $0 \leq \eta_k \leq 1$, $\mathbf{u}$ is the parameter of the k-th first target machine learning model, $\mathbf{w}_k^*$ is the parameter of k-th source machine learning model among parameters $\{\mathbf{w}_1^*, \cdots, \mathbf{w}_K^*\}$ source machine learning models. Since $g_{tk}(\mathbf{u})$ is a 1-strong convex function and doubly differentiable, and the loss function of the logistic regression model satisfies the requirements about the loss function in the above predetermined conditions. Therefore, the parameter $\mathbf{u}_k^*$ of the k-th first target machine learning model corresponding to the k-th migration item $\mathbf{w}_k^*$ may be obtained using the mechanism A$_2$ of the parameter $\mathbf{w}_k^*$ for solving the machine learning model described above, by replacing w with u, replacing $D$ with $D_t$ or $D_{t1}$, replacing g$_k$(w) with g$_{tk}$(u), replacing $\lambda_k$ with $\lambda_{tk}$ (the constant for controlling the regularization intensity in the objective function for training the first target machine learning model), and replacing $q_k$ with $q_{tk}$ (the scaling constant for scaling the samples in the k-th first target data subset),. Specifically, assuming that let the privacy budget of the entire target data privacy protection mode be $\epsilon_t$, then in the case that the previously divided target data set is $D_t$ and the target data set subsequently used to train the second target machine learning model completely overlaps or partly overlaps with $D_t$, parameters of the obtained K first target machine learning models

$$\{\mathbf{u}_1^*, \cdots, \mathbf{u}_K^*\} = A_2(\mathcal{D}_t, p\epsilon_t, S_G, \{\lambda_{tk}, g_{tk}, q_{tk}\}_{k=1}^K)$$ (wherein $p\,\epsilon_t$ is the privacy budget corresponding to the noise term included in the objective function for training the first target machine learning model, wherein p is the ratio of the privacy budget corresponding to the noise term included in the objective function for training the first target machine learning model to the privacy budget of the entire target data privacy protection mode, and $0 \le p \le 1$), and in the case that the target data set previously divided is $D_{t1}$ and the target data set subsequently used to train the second target machine learning model completely does not overlap with $D_{t1}$, the parameters of the obtained K first target machine

learning models $$\{\mathbf{u}_1^*, \cdots, \mathbf{u}_K^*\} = A_2(\mathcal{D}_{t1}, \epsilon_t, S_G, \{\lambda_{tk}, g_{tk}, q_{tk}\}_{k=1}^K)$$ (wherein $\epsilon_t$ is the larger privacy budget of the privacy budget corresponding to the noise term included in the objective function for training the first target machine learning model and the privacy budget corresponding to the noise term included in the objective function for training the second target machine learning model).

As described above, in equation 3, $\|\mathbf{u} - \mathbf{w}_k^*\|$ is contained in the regularization function $g_{tk}(\mathbf{u})$, so that the objective function for the training of the first target machine learning model is constructed to reflect the difference value between the parameter of the first target machine learning model and the migration item corresponding to the first target machine learning model, thereby effectively implementing the migration of knowledge on the corresponding source data subset to the target data set.

It needs to be explained that although the process of training the first target machine learning model in the target data privacy protection mode is introduced above by mainly taking the logistic regression model as an example to , it should be clear to those skilled in the art that the source machine learning model and the first target machine learning model in the present disclosure are not limited to the logistic regression model, but may be for example, any linear model that satisfies the predetermined conditions described above, or even any other appropriate model.

In the case of obtaining a plurality of first target machine learning models (for example, obtaining a plurality of first target machine learning models according to the above-mentioned "direct obtaining mode of the first target machine learning model " or "the first target machine learning model through training"), the second target machine learning model obtaining device 140 may obtain a second target machine learning model by utilizing the plurality of first target machine learning models. Here, the first target machine learning model and the second target machine learning model are generally a structure of upper and lower layers. For example, the first target machine learning model may correspond to the first layer machine learning model, and the second target machine learning model may correspond to the second layer machine learning model.

Specifically, in the case that the first target machine learning model obtaining device 130 obtains the plurality of first target machine learning models through the " direct obtaining mode of the first target machine learning model" described above, the second target machine learning model obtaining device 140 may obtain a plurality of second target machine learning model in the following way (hereinafter, for convenience of description, the way is referred to as an " obtaining mode of the second target machine learning model through training"): first, the second target machine learning model obtaining device 140 may divide the target data set into the plurality of target data subsets in the same way as dividing the source data set according to the data attribute field. Here, data records in each target data subset and the source data subset corresponding to each target data subset include the same data attribute fields. How to divide the target data set according to the data attribute field in the same way as dividing the source data set is described in describing the "first target machine learning model through training" in which the first target machine learning model is obtained. Therefore, it will not be repeated here, for details, please refer to the above description. Secondly, the second target machine learning model obtaining device 140 may perform prediction for each target data subset by utilizing the first target machine learning model corresponding to the each target data subset, to acquire a prediction result for each data record in each target data subset. Finally, in the target data privacy protection mode, the second target machine learning model is trained for a third prediction target based on a set of training samples composed of the plurality of acquired prediction results corresponding to each target data record. Here, the label of the training sample is the label of the target data record with respect to the third prediction target. The generation process of feature of the training samples will be described in detail below.

Specifically, for example, it may be assumed that the obtained K first target machine learning models are all logistic regression models, and the parameters of the K first target machine learning models are $$\mathbf{u}_1^*, \cdots, \mathbf{u}_K^*$$ respectively (meanwhile, K is also the number of the divided target data subsets), then the training sample composed of the obtained plurality of prediction results corresponding to each target data record in the target data set may be represented as:

$$[\sigma(\mathbf{x}_{1i}^T \mathbf{u}_1^*), \sigma(\mathbf{x}_{2i}^T \mathbf{u}_2^*), \cdots , \sigma(\mathbf{x}_{Ki}^T \mathbf{u}_K^*)]^T$$

Wherein $x_{ki}$ (wherein $k \in \{1, \cdots , K\}$) is the i-th data record in the k-th target data subset. As an example, $\sigma(\mathbf{x}_{1i}^T \mathbf{u}_1^*)$ is the prediction result of the first first target machine learning model among the K first target machine learning models, with respect to the i-th data record in the first target data subset among K target data subsets (here, for example, the prediction result may be a prediction probability value (i.e., confidence value) output by the first target machine learning model with respect to the i-th data record), by such analogy, the prediction results $\sigma(\mathbf{x}_{1i}^T \mathbf{u}_1^*), \sigma(\mathbf{x}_{2i}^T \mathbf{u}_2^*), \cdots , \sigma(\mathbf{x}_{Ki}^T \mathbf{u}_K^*)$ of K first target machine learning models, with respect to the i-th data record in the corresponding target data subset respectively, may be obtained. The above-described K prediction results are the K prediction results corresponding to the i-th target data record in the target data set, and the K prediction results $[\sigma(\mathbf{x}_{1i}^T \mathbf{u}_1^*), \sigma(\mathbf{x}_{2i}^T \mathbf{u}_2^*), \cdots , \sigma(\mathbf{x}_{Ki}^T \mathbf{u}_K^*)]^T$ may constitute the feature part of the training sample of the second target machine learning model.

According to an exemplary embodiment, the first target machine learning model and the second target machine learning model may belong to a same type of machine learning model. For example, the second target machine learning model may also be the generalized linear model (for example, the logistic regression model). In addition, the target data privacy protection mode here may be a protection mode conforming to the differential privacy definition, but not limited thereto. Specifically, the target data privacy protection mode may be to add random noise in the process of obtaining the second target machine learning model. For example, in the target data privacy protection mode, the second target machine learning model obtaining device 140 may construct an objective function for training the second target machine learning model to at least include a loss function and a noise term. In this case, the second target machine learning model may be trained according to the mechanism $A_1$ for training the machine learning model described below, wherein $A_1$ is the mechanism for solving the parameter of the machine learning model in the case that the differential privacy definition is satisfied. Specifically, the implementation process of mechanism $A_1$ is as follows:

It is assumed that data set $D = \{(x_1, y_1), \cdots , (x_n, y_n))\}$, wherein $x_i$ is a sample, $y_i$ is a label of the sample, $\mathbf{x}_i \in \mathbb{R}^d$, $i \in \{1, \cdots , n\}$, wherein n is the number of samples and d is the dimension of a sample space, $\mathbb{R}^d$ is a d-dimensional sample space, then the machine learning model may be trained by utilizing the following equation 4 based on the data set $D$, thereby obtaining the parameter of the machine learning model satisfying the differential privacy protection definition.

Specifically, before utilizing the equation 4 to solve the parameter of the machine learning model, the following operations may be performed:

1. scaling the data set $D$, so that $\|x_i\| \leq 1$ is satisfied for any i, wherein $\|x_i\|$ represents two-norm of $x_i$;

2. $\epsilon' = \epsilon - \log(1 + \frac{2c}{n\lambda} + \frac{c^2}{n^2\lambda^2})$, wherein c and $\lambda$ are constants, $\epsilon$ is the privacy budget in the above equation 1;

3. if $\epsilon' > 0$, $\Delta = 0$, otherwise, $\Delta = \frac{1}{n(\exp(\epsilon/4)-1)} - \lambda$ and $\epsilon' = \epsilon/2$;

4. sampling b from density function $h(\mathbf{b}) \propto e^{-\frac{\epsilon'}{2}\|\mathbf{b}\|}$, specifically, two-norm $\|b\|$ of b may be sampled from a gamma distribution $\Gamma(d, \frac{2}{\epsilon})$, and then $\mathbf{b} = \|\mathbf{b}\|\mathbf{u}$ is obtained based on a direction $\mathbf{u}$ of $\mathbf{b}$ being sampled uniformly and randomly.

Next, the machine learning model may be trained in the data privacy protection mode, based on the data set $D$, by utilizing equation 4, and the equation 4 is as follows:

$$\mathbf{w}^* = \arg\min_{\mathbf{w}} \frac{1}{n} \sum_{i=1}^{n} \ell(\mathbf{w}^T\mathbf{x}_i, y_i) + \lambda g(\mathbf{w}) + \frac{\mathbf{b}^T\mathbf{w}}{n} + \frac{1}{2}\Delta\|\mathbf{w}\|^2$$

......equation 4

In the equation 4, w is the parameter of the machine learning model, $\ell(\mathbf{w}^T\mathbf{x}_i, y_i)$ is a loss function, $g(\mathbf{w})$ is a regularization function, $\dfrac{\mathbf{b}^T\mathbf{w}}{n}$ is the noise term used to add random noise in the process of training the machine learning model to implement the data privacy protection, $\dfrac{1}{2}\Delta\|\mathbf{w}\|^2$ is a compensation term for the privacy protection, and $\lambda$ is a constant for controlling regularization intensity, $\dfrac{1}{n}\sum_{i=1}^{n}\ell(\mathbf{w}^T\mathbf{x}_i, y_i) + \lambda g(\mathbf{w}) + \dfrac{\mathbf{b}^T\mathbf{w}}{n} + \dfrac{1}{2}\Delta\|\mathbf{w}\|^2$ is the constructed objective function for training the machine learning model. According to the above equation 4, the value of w when the value of the objective function is minimized is the finally solved parameter W* of the machine learning model.

When the second target machine learning model is trained, according to the above mechanism $A_1$, by making the above $D = \tilde{D}_t$ (wherein $x_i$ is the training sample $[\sigma(\mathbf{x}_{1i}^T\mathbf{u}_1^*), \sigma(\mathbf{x}_{2i}^T\mathbf{u}_2^*), \cdots, \sigma(\mathbf{x}_{Ki}^T\mathbf{u}_K^*)]^T$ as described above, $y_i$ is the label of $x_i$ for the third prediction target, $\tilde{D}_t$ is a set of training samples composed of the training samples $[\sigma(\mathbf{x}_{1i}^T\mathbf{u}_1^*), \sigma(\mathbf{x}_{2i}^T\mathbf{u}_2^*), \cdots, \sigma(\mathbf{x}_{Ki}^T\mathbf{u}_K^*)]^T$), $\lambda = \lambda_v$ (wherein $\lambda_v$ is a constant used to control the regularization intensity in the objective function for training the second target machine learning model, the regularization function $g(\mathbf{w}) = g(\mathbf{v}) = \frac{1}{2}\|\mathbf{v}\|^2$ and $\epsilon = \epsilon_t$ ($\epsilon_t$ is the privacy budget of the target data privacy protection mode used when the second target machine learning model is trained, the parameter $v^* = A_1(\tilde{D}_t, \epsilon_t, \lambda_v, g(\cdot))$ of the second target machine learning model may be solved by utilizing the equation 4.

It needs to be explained that although the process of training the second target machine learning model has been described above by an example that each of the first target machine learning model and the second target machine learning model is the logistic regression model, the first target machine learning model and the second target machine learning model are not limited to the logistic regression model, and the second target machine learning model may be any machine learning model of the same type as or different type with the first target machine learning model. In addition, the third prediction target here may be the same as or similar to the second prediction target mentioned above when the training of the first target machine learning model is described. In addition, it needs to be explained that when the second prediction target is not exactly the same as the third prediction target, each target data record in the target data set may actually correspond to two labels, which are the label of the target data record regarding the second prediction target and the label of the target data record regarding the third prediction target.

In addition, alternatively, according to another exemplary embodiment of the present disclosure, in the case that the plurality of first target machine learning models are obtained by the first target machine learning model obtaining device 130 through the "obtaining mode of the first target machine learning model through training" described above, the second target machine learning model obtaining device 140 may obtain the second target machine learning model through the following operation (hereinafter, for the convenience of description, this mode of obtaining the second target machine learning model is referred to as a "direct obtaining mode of the second target machine learning model " for short): setting a rule of the second target machine learning model to: obtain the prediction result of the second target machine learning model for each prediction data record based on the plurality of prediction results corresponding to the each prediction data record obtained by a following way including: acquiring the prediction data record and dividing the prediction data record into a plurality of sub prediction data according to the data attribute field in the same way as dividing the source data set; performing prediction for each sub prediction data in each prediction data record by utilizing the first target machine learning model corresponding to the each sub prediction data, to acquire the prediction result for the each sub prediction data. Here, the prediction data record may include the same data attribute fields as the target data record and the source data record described previously, but the difference is that the prediction data record does not include the label, and the way of dividing the data record according to the data attribute field in the same way as dividing the source data set has been described by the example above. Therefore, how to divide the data record according into the plurality of sub prediction data will not be repeated here. Here, each sub prediction data may include at least one data attribute field. In addition, the process of performing prediction for each target data subset by utilizing the first target machine learning model corresponding to the each target data subset to acquire the prediction result for each data record in the each target data subset has been described above, therefore, the process of performing prediction for each sub prediction data by utilizing the first target machine learning model corresponding to the each sub prediction data, to acquire the prediction result for each sub prediction data divided in each prediction data record will not be repeated here, the only difference is that the object of the prediction process is the divided sub prediction data. As an example, obtaining the prediction result of the second target machine learning model for each prediction data record based on the plurality of acquired prediction results corresponding to the each prediction data record may be obtaining the prediction result of the second target machine learning model for each prediction data record by averaging or taking the maximum value of the plurality of prediction results, or voting on the plurality of prediction results, etc. As an example, if the plurality of prediction results are five prediction results (that is, the number of the plurality of first target machine learning models is five) and the probabilities that transaction is fraud are 20%, 50%, 60%, 70% and 80%, respectively, then the prediction result of the second target machine learning model for the prediction data record may be a probability value obtained by averaging 20%, 50%, 60%, 70% and 80%. As another example, if the plurality of prediction results are that "transaction is fraud", "transaction is not fraud", "transaction is fraud", "transaction is fraud" and "transaction is fraud" respectively, it may be obtained according to voting mode that the prediction result of the second target machine learning model for the prediction data record is "transaction is fraud".

It needs to be explained that the second target machine learning model of the present disclosure is not limited to the model obtained by the machine learning, and may generally refer to any appropriate mechanism for processing data (for example, the above-described rule for obtaining the prediction result for each prediction data record by synthesizing the plurality of prediction results).

As described above, the first target machine learning model obtaining device 130 may obtain the plurality of first target machine learning models by utilizing either the target data set $D_t$ or the first target dataset $D_{t1}$ in $D_t$, in the above " obtaining mode of the first target machine learning model through training". In the case that the first target machine learning model obtaining device 130 obtains the plurality of first target machine learning models by utilizing the target data set $D_t$ in the "obtaining mode of the first target machine learning model through training" described above, alternatively, according to another exemplary embodiment of the present disclosure, the second target machine learning model obtaining device 140 may perform prediction for each first target data subset by utilizing the first target machine learning model corresponding to each first target data subset to acquire the prediction result for each data record in each first target data subset; and train the second target machine learning model for the third prediction target based on a set of training samples composed of the plurality of acquired prediction results corresponding to each target data record, in the target data privacy protection mode. The above process is similar to the previously described " obtaining mode of the second target machine learning model through training", but the difference is that since the target data set has been divided into the plurality of first target data subsets in the " obtaining mode of the first target machine learning model through training" for obtaining the first target machine learning model, there is no need to divide the data set here, but prediction operation may be performed for each target data subset by utilizing the first target machine learning model corresponding to the each target data subset, and then the second target machine learning model may be trained based on the set of training samples composed of the plurality of prediction results corresponding to each target data record in the target data set. For the specific prediction operation and the process of training the second target machine learning model, since they have been described above in the previous "obtaining mode of the second target machine learning model through training", they will not be repeated here. Finally, the parameter v* = $A_1(\tilde{D}_t, (1 - p)_{\in_t}, \lambda_v, g(\cdot))$ of the second target machine learning model may be obtained, wherein $\in_t$ is the privacy budget of the entire target data privacy protection mode, $(1 - p)_{\in_t}$ is the privacy budget corresponding to the noise term included in the objective function for training the second target machine learning model.

Alternatively, according to another exemplary embodiment of the present disclosure, in the case that the first target machine learning model obtaining device 130 may obtain the plurality of first target machine learning models by utilizing the first target dataset $D_{t1}$ in the " obtaining mode of the first target machine learning model through training" described above, the second target machine learning model obtaining device 140 may divide a second target data set into a plurality of second target data subsets according to the data attribute field in the same way as dividing the source data set. Here, the second target data set may at least include remaining target data records excluding the first target data set from the target data set, wherein the target data record in the second target data set has the same attribute fields as the source data record. As an example, the second target data set may include only the remaining target data record excluding the first target data set from the target data set (i.e., the second target data set may be $D_{t2}$ mentioned above), or in addition to the remaining target data record excluding the first target data set from the target data set, the second target data set may further include a part of the target data records in the first target data set. In addition, the mode of dividing the source data set according to the data attribute field has been described above, thus the operation of dividing the second target data set will not be repeated here. Then, the second target machine learning model obtaining device 140 may perform prediction for each second target data subset by utilizing the first target machine learning model corresponding to the each second target data subset, to acquire the prediction result for each data record in each second target data subset, and train the second target machine learning model for the third prediction target based on the set of training samples composed of a plurality of acquired prediction results corresponding to each target data record (each target data record in the second target data set) in the target data privacy protection mode. Since the process of performing prediction for each target data subset by utilizing the first target machine learning model corresponding to the each target data subset to acquire the prediction result for each data record in each target data subset has been described above, the process of performing prediction for each second target data subset by utilizing the first target machine learning model corresponding to the each second target data subset to acquire the prediction result for each data record in the each second target data subset will not be repeated here, and the only difference is that the object of prediction process herein is each second target data subset. Finally, the obtained parameter of the second target machine learning model may be represented as $v^* = A_1(\tilde{D}_t, \in_t, \lambda_v, g(\cdot))$.

In the above various exemplary embodiments, the third prediction target may be the same as or similar to the second prediction target mentioned above when the training of the first target machine learning model is described. For example, the second prediction target may be to predict whether a transaction is suspected of being illegal, and the third prediction target may be to predict whether the transaction is suspected of being illegal or predict whether the transaction is fraud. In addition, the second target machine learning model may be any machine learning model of the same type as or different type with the first target machine learning model, and the second target machine learning model may be used for performing a business decision. Here, the business decision may involve at least one of transaction anti fraud, account opening anti fraud, intelligent marketing, intelligent recommendation and loan appraisal, but not limited thereto. For example, the trained target machine learning model may also be used for business decision related to physiological conditions. In fact, the present disclosure has no limit on the type of specific business decision that the target machine learning model may be applied to, as long as it is the business suitable for making a decision by utilizing machine learning model.

From the process of obtaining the first target machine learning model and the process of obtaining the second target machine learning model described above, it may be seen that in the process of obtaining the plurality of first target machine learning models and/or the process of obtaining the second target machine learning model, all or a part of the plurality of target data records included in the acquired target data set are utilized in the target data privacy protection mode

In addition, as described above, in the target data privacy protection mode, the first target machine learning model obtaining device 130 may construct the objective function for training the first target machine learning model to at least include the loss function and the noise term, and the second target machine learning model obtaining device 140 may construct the objective function for training the second target machine learning model to at least include the loss function and the noise term. The privacy budget of the target data privacy protection mode may depend on the sum of or the greater one of the privacy budget corresponding to the noise term included in the objective function for training the first target machine learning model and the privacy budget corresponding to the noise term included in the objective function for training the second target machine learning model. Specifically, in the case that the target data set used in the process of training the first target machine learning model is completely the same or partly the same as the target data set used in the process of training the second target machine learning model (for example, the target data set used in the process of training the first target machine learning model is the first target data set, while the target data set used in the process of training the second target machine learning model includes the remaining target data record excluding the first target data set from the target data set and a part of the target data records in the first target data set), the privacy budget of the target data privacy protection mode may depend on the sum of the privacy budget corresponding to the noise term included in the objective function for training the first target machine learning model and the privacy budget corresponding to the noise term included in the objective function for training the second target machine learning model. In the case that the target data set used in the process of training the first target machine learning model is completely different from or does not overlap with the target data set used in the process of training the second target machine learning model (for example, the target data set may be divided into the first target data set and the second target data set according to the target data record, and the first target data set is used in the process of training the first target machine learning model while the second target data set is used in the process of training the second target machine learning model), the privacy budget of the target data privacy protection mode may depend on the greater one of the privacy budget corresponding to the noise term included in the objective function for training the first target machine learning model and the privacy budget corresponding to the noise term included in the objective function for training the second target machine learning model.

Above, the machine learning system 100 according to the exemplary embodiment of the present disclosure has been described in conjunction with FIG. 1. According to the above exemplary embodiment, the machine learning system 100 may successfully migrate knowledge in the corresponding part of source data subset to the target data set in the source data privacy protection mode respectively, and at the same time, ensure the availability of the migrated knowledge, so that the second target machine learning model with better model effect may be trained by further synthesizing more knowledge in the target data privacy protection mode, so as to be applied to the corresponding business decision.

It needs to be explained that although the machine learning system is divided into devices for performing corresponding processing respectively (for example, the target data set acquisition device 110, the migration item acquisition device 120, the first target machine learning model obtaining device 130 and the second target machine learning model obtaining device 140) when the machine learning system is described above, it is clear to those skilled in the art that the processing performed by the above each device may be also performed in the case that the machine learning system is not divided into any specific devices or there is no clear demarcation among the devices. In addition, the machine learning system 100 described above with reference to FIG. 1 is not limited to including the devices described above, but some other devices (for example, a prediction device, a storage device and/or a model updating device, etc.) may also be added as needed, or the above devices may also be combined. For example, in the case that the machine learning system 100 includes the prediction device, the prediction device may acquire a prediction data set including at least one prediction data record, divide the prediction data set into a plurality of prediction data subsets according to the data attribute field in the same way as dividing the source data set, perform prediction for each prediction data subset by utilizing the trained first target machine learning model corresponding to the each prediction data subset to acquire the prediction result for each data record in the each prediction data subset, and obtain the prediction result for each prediction data record based on the acquired plurality of prediction results corresponding to each prediction data record. For example, the prediction result for each prediction data record may be obtained by directly synthesizing the plurality of acquired prediction results corresponding to each prediction data record (for example, averaging the plurality of prediction results), or the prediction result for each prediction data record may be obtained by performing prediction for a prediction sample composed of the plurality of acquired prediction results corresponding to each prediction data record by utilizing the trained second target machine learning model.

Specifically, according to an exemplary embodiment, a system for performing prediction by utilizing the machine learning model with data privacy protection (hereinafter, for convenience of description, referred to as a "prediction system" for short) may include a target machine learning model acquisition device, a prediction data record acquisition device, a dividing device, and a prediction device. Here, the target machine learning model acquiring device may acquire a plurality of the first target machine learning models and a second target machine learning model described above. Specifically, the target machine learning model acquiring device may acquire the plurality of first target machine learning models according to the above-mentioned "direct obtaining mode of the first target machine learning model" or "obtaining mode of the first target machine learning model through training". Accordingly, the target machine learning model acquisition device may acquire the second target machine learning model according to the "obtaining mode of the second target machine learning model through training" or "direct obtaining mode of the second target machine learning model". That is to say, the target machine learning model acquisition device may itself perform the operation of obtaining the first target machine learning model and the second target machine learning model described above to acquire the plurality of the first target machine learning models and the second target machine learning model. In this case, the target machine learning model acquisition device may correspond to the machine learning system 100 described above. Alternatively, the target machine learning model acquisition device may also directly acquire the plurality of the first target machine learning models and the second target machine learning model from the machine learning system 100 for subsequent prediction, in the case that the machine learning system 100 has obtained the plurality of the first target machine learning models and the second target machine learning model through the above modes.

The prediction data record acquisition device may acquire a prediction data record. Here, the prediction data record may include the same data attribute fields as the source data record and the target data record described previously. In addition, the prediction data record acquisition device may acquire the prediction data record one by one in real time, or acquire the prediction data record in batches offline. The dividing device may divide the prediction data record into a plurality of sub prediction data. As an example, the dividing device may divide the prediction data record into the plurality of sub prediction data according to the data attribute field in the same way as dividing the source data set previously described, and each sub prediction data may include at least one data attribute field. The dividing mode has been described in conjunction with the example above, thus it will not be repeated here, and the difference is that the object divided here is the prediction data record.

The prediction device may perform prediction for each sub prediction data in each prediction data record by utilizing the first target machine learning model corresponding to the each sub prediction data, to acquire the prediction result for the each sub prediction data. For example, if the sub prediction data includes two data attribute fields that are the gender and the historical credit record, the first target machine learning model trained based on the set of data record including the same data attribute fields as the sub prediction data (i.e., the first target data subset mentioned above) is the first target machine learning model corresponding to the sub data record. In addition, the prediction result here may be, for example, the confidence value, but not limited thereto.

Then, the prediction device may input the plurality of prediction results corresponding to each prediction data record obtained by the plurality of first target machine learning models to the second target machine learning model, to obtain the prediction result for each prediction data record. For example, the prediction device may obtain the prediction result of the second target machine learning model for each prediction data record based on the plurality of prediction results according to the set rule of the second target machine learning model, for example, obtain the prediction result for each prediction data record by averaging, taking the maximum value or voting on the plurality of prediction results. Alternatively, the prediction device may perform prediction for the prediction sample composed of the plurality of prediction results by utilizing the second target machine learning model trained in advance (as for a specific training process, referring to the related description of training the second target machine learning model described previously), to obtain the prediction result for each prediction data record.

The prediction system according to the exemplary embodiment of the present disclosure may perform prediction by utilizing the plurality of first target machine learning models after dividing the prediction data record, to obtain the plurality of prediction results corresponding to each prediction data record, and further obtain a final prediction result by utilizing the second target machine learning model based on the plurality of prediction results, thereby the prediction effect of the model may be improved.

In addition, it needs to be explained that the "machine learning" mentioned in the present disclosure may be implemented in the form of "supervised learning", "unsupervised learning" or "semi-supervised learning", and the exemplary embodiments of the present invention do not put specific limits on the specific form of the machine learning.

FIG. 2 is a flow chart showing a method for carrying out the machine learning in a data privacy protection mode according to an exemplary embodiment of the present disclosure (hereinafter, for convenience of description, referred to as a "machine learning method" for short).

Here, as an example, the machine learning method shown in FIG. 2 may be performed by the machine learning system 100 shown in FIG. 1, may also be implemented by computer programs or instructions in software completely, and may also be performed by a specially configured computing system or computing device, for example, may be performed by a system including at least one computing device and at least one storage device storing instructions, when executed by the at least one computing device, causing the at least one computing device to perform the machine learning method described above. For convenience of description, it is assumed that the method shown in FIG. 2 is performed by the machine learning system 100 shown in FIG. 1, and that the machine learning system 100 may have the configuration shown in FIG. 1.

Referring to FIG. 2, at step S210, the target data set acquisition device 110 may acquire a target data set including a plurality of target data records. Any content related to acquiring the target data set described above when the target data set acquisition device 110 is described with reference to FIG. 1 is applicable herein, thus it will not be repeated here.

After acquiring the target data set, at step S220, the migration item acquisition device 120 may acquire a plurality of migration items regarding a source data set. Here, each migration item among the plurality of migration items may be used to migrate knowledge of a corresponding part of the source data set to the target data set under source data privacy protection. As an example, the corresponding part of the source data set may be a source data set obtained by dividing the source data set according to the data attribute field. The contents about the source data set, the migrate item, the corresponding source data subset, and the way to divide the source data set, etc., have been described when describing the migration item acquisition device 120 of FIG. 1, and thus it will not be repeated here.

Specifically, at step S220, the migration item acquisition device 120 may receive the plurality of migration items regarding the source dataset from outside. Or, the migration item acquisition device 120 may acquire the plurality of migration items regarding the source data set by carrying out machine learning processing on the source data set by itself. Specifically, the migration item acquisition device 120 may first acquire the source data set including a plurality of source data records, and herein the source data record and the target data record may include the same data attribute fields. Then, the migration item acquisition device 120 may divide the source data set into a plurality of source data subsets according to the data attribute field, wherein the data record in each source data subset include at least one data attribute field. Next, the migration item acquisition device 120 may train a source machine learning model corresponding to each source data subset for a first prediction target based on each source data subset in source data privacy protection mode, and use a parameter of each trained source machine learning model as the migration item related to each source data subset.

Here, as an example, the source data privacy protection mode may be a protection mode conforming to the differential privacy protection definition, but not limited thereto. In addition, the source data privacy protection mode may be to add random noise in the process of carrying out machine learning related processing based on the source data set. For example, the source data privacy protection mode may be to add random noise in the process of training the source machine learning model. According to an exemplary embodiment, an objective function for training the source machine learning model may be constructed to at least include a loss function and a noise term, in the source data privacy protection mode. Here, the noise term is used to add random noise in the process of training the source machine learning model, thereby implementing source data privacy protection. In addition, alternatively, the objective function may also be constructed to include other constraint terms for constraining model parameters, in the source data privacy protection mode. According to an exemplary embodiment, the source machine learning model may be a generalized linear model (for example, a logistic regression model), but not limited thereto, for example, may be any linear model satisfying predetermined conditions, or even any appropriate model satisfying certain conditions.

The detail of acquiring the migration items have been described when the migration item acquisition device 120 is described with reference to FIG. 1, , thus it will not be repeated here. In addition, it needs to be explained that all the descriptions about the source data privacy protection mode, the objective function, etc., mentioned when the migration item acquisition device 120 is described with reference to FIG. 1 are applicable to FIG. 2, and thus they will not be repeated here.

After obtaining the plurality of migration items regarding the source data set, at step S230, the first target machine learning model obtaining device 130 may obtain, by utilizing each migration item of the plurality of migration items respectively, a first target machine learning model corresponding to the each migration item, so as to obtain a plurality of first target machine learning models.

Then, at step S240, the second target machine learning model obtaining device 140 may obtain a second target machine learning model by using the plurality of first target machine learning models obtained at step S230. Here, as an example, the target data privacy protection mode may also be the protection mode conforming to the differential privacy definition, but not limited thereto, and may be other data privacy protection mode that is the same as or different from the source data privacy protection mode. In addition, the target data privacy protection mode may be to add random noise in the process of obtaining the first target machine learning model and/or the second target machine learning model.

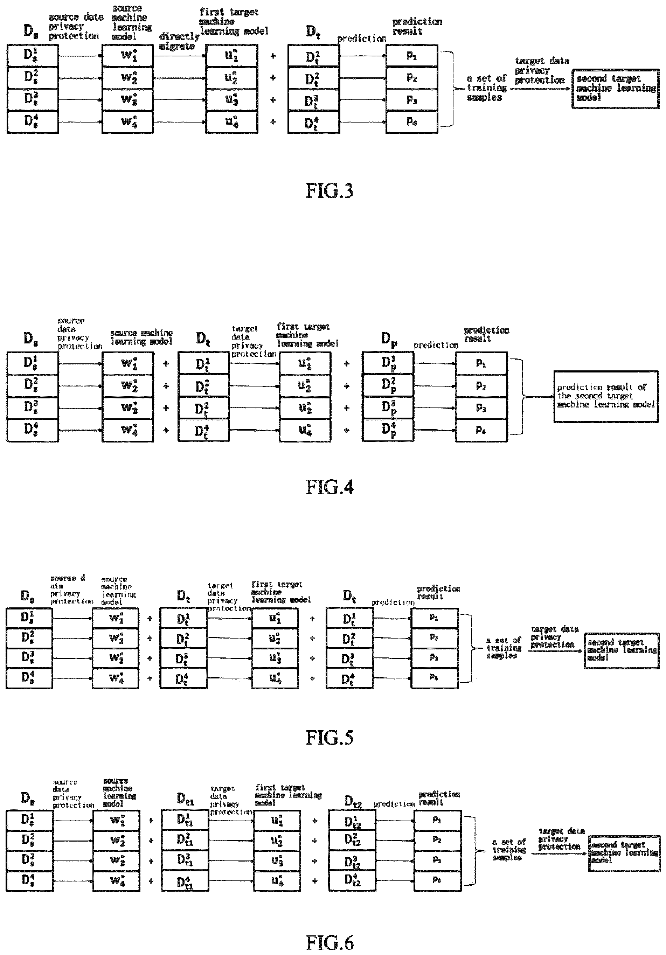

Hereinafter, examples of the method for carrying out the machine learning under the data privacy protection according to exemplary embodiments of the present disclosure will be described in detail with reference to FIGS. 3 to 6.

FIG. 3 is a schematic diagram showing the method for carrying out the machine learning in the data privacy protection mode according to the first exemplary embodiment of the present disclosure.

Specifically, according to the first exemplary embodiment of the present disclosure, at step S220, the acquired source data set is divided into a plurality of source data set according to the data attribute field, for example, referring to FIG. 3, $D_s$ is the source data set, which is divided into four source data subsets $D_s^1$, $D_s^2$, $D_s^3$ and $D_s^4$ according to the data attribute field. Then, the source machine learning model corresponding to each source data subset is trained for the first prediction target based on the each source data subset, in the source data privacy protection mode, and the parameter of each trained source machine learning model is used as the migration item related to each source data subset. In FIG. 3, $w_1^*$, $w_2^*$, $w_3^*$ and $w_4^*$ are the parameters of the source machine learning models corresponding to the source data subsets $D_s^1$, $D_s^2$, $D_s^3$ and $D_s^4$ respectively, and are used as migration items related to the source data subsets $D_s^1$, $D_s^2$, $D_s^3$ and $D_s^4$ respectively.

At step S230, the first target machine learning model obtaining device 130 may directly use each migration item as the parameter of the first target machine learning model corresponding to each migration item without using the target data set. For example, referring to FIG. 3, $u_1^*$, $u_2^*$, $u_3^*$ and $u_4^*$ are parameters of the first target machine learning models corresponding to the migration items $w_1^*$, $w_2^*$, $w_3^*$ and $w_4^*$ respectively, and $u_1^* = w_1^*$, $u_2^* = w_2^*$, $u_3^* = w_3^*$, $u_4^* = w_4^*$. Then, at step S240, the second target machine learning model obtaining device 140 may divide the target data set into a plurality of target data subsets according to the data attribute field in the same way as dividing the source data set, wherein the data records in each target data subset and the source data subset corresponding to the each target data subset include the same data attribute fields. For example, referring to FIG. 3, according to the same way as dividing the source data set $D_s$, the target data set $D_t$ may be divided into four target data subsets $D_t^1$, $D_t^2$, $D_t^3$ and $D_t^4$, wherein the data records in $D_t^1$ and $D_s^1$ include the same data attribute fields, similarly, the data records in $D_t^2$ and $D_s^2$ include the same data attribute fields, the data records in $D_t^3$ and $D_s^3$ include the same data attribute fields, the data records in $D_t^4$ and $D_s^4$ include the same data attribute fields. Then, at step S240, the second target machine learning model obtaining device 140 may perform prediction for each target data subset by utilizing the first target machine learning model corresponding to each target data subset, to acquire a prediction result for each data record in the each target data subset. For example, referring to FIG. 3, the prediction is performed for the target data subsets $D_t^1$, $D_t^2$, $D_t^3$ and $D_t^4$, by utilizing the first target machine learning models of which the parameters are $u_1^*$, $u_2^*$, $u_3^*$ and $u_4^*$ respectively, wherein $p_1$ is a prediction result set obtained by performing prediction for the target data subset $D_t^1$ by utilizing the first target machine learning model of which the parameter is $u_1^*$, which includes the prediction result of the first target machine learning model for each data record in $D_t^1$ of which the parameter is $u_1^*$. Similarly, $p_2$, $p_3$ and $p_4$ are respectively the prediction result sets obtained by performing prediction by utilizing the first target machine learning model of which the parameter is $u_2^*$, the first target machine learning model of which the parameter is $u_3^*$, and the first target machine learning model of which the parameter is $u_4^*$. Next, at step S240, the second target machine learning model obtaining device 140 may train the second target machine learning model for a third prediction target based on the set of training samples composed of the plurality of acquired prediction results corresponding to each target data record in the target data privacy protection mode. For example, for each target data record in the target data set $D_t$, there is one prediction result corresponding to it in each of the prediction result sets $p_1$, $p_2$, $p_3$ and $p_4$, these four prediction results may constitute the training sample corresponding to each target data record, and such a set of the training samples may be used to train the second target machine learning model for the third prediction target under target data privacy protection.

As shown in FIG. 3, in the process of obtaining the second target machine learning model, all the data records in the plurality of target data records are utilized in the target data privacy protection mode.

FIG. 4 shows a schematic diagram of the method for carrying out the machine learning in the data privacy protection mode according to a second exemplary embodiment of the present disclosure.

FIG. 4 differs from FIG. 3 at steps S230 and S240. Specifically, in the second exemplary embodiment, after the plurality of migration items regarding the source data set (for example, $w_1^*$, $w_2^*$, $w_3^*$ and $w_4^*$ ) are acquired at step S220, at step S230, the first target machine learning model obtaining device 130 may divide the target data set into a plurality of first target data subsets according to the data attribute field in the same way as dividing the source data set, wherein the data records of each first target data subset and the source data subset corresponding to each first target data subset include the same data attribute fields. Referring to FIG. 4, for example, the target data set $D_t$ may be divided into four first target data subsets $D_t^1$, $D_t^2$, $D_t^3$ and $D_t^4$ in the same way as dividing the source data set $D_s$, wherein $D_t^1$, $D_t^2$, $D_t^3$ and $D_t^4$ correspond to the source data subsets $D_s^1$, $D_s^2$, $D_s^3$ and $D_s^4$ respectively.

Then, the first target machine learning model obtaining device 130 may train, in combination with the migration item related to the source data subset corresponding to each first target data subset, the first target machine learning model corresponding to the migration item for the second prediction target based on each first target data subset, in the target data privacy protection mode. For example, referring to FIG. 4, the first target machine learning model corresponding to each migration item is trained for the second prediction target, respectively in combination with the migration items $w_1^*$, $w_2^*$, $w_3^*$ and $w_4^*$, based on each first target data subset $D_t^1$, $D_t^2$, $D_t^3$ and $D_t^4$. As shown in FIG. 4, the parameter of the first target machine learning model trained in combination with the migration item $w_1^*$ based on the first target data subset $D_t^1$ is $u_1^*$, the parameter of the first target machine learning model trained in combination with the migration item $w_2^*$ based on the first target data subset $D_t^2$ is $u_2^*$, the parameter of the first target machine learning model trained in combination with the migration item $w_3^*$ based on the first target data subset $D_t^3$ is $u_3^*$, and the parameter of the first target machine learning model trained in combination with the migration item $w_4^*$ based on the first target data subset $D_t^4$ is $u_4^*$.

Next, at step S240, the second target machine learning model obtaining device 140 may set the rule of the second target machine learning model to: obtain the prediction result of the second target machine learning model for each prediction data record based on the plurality of prediction results corresponding to each prediction data record obtained by: acquiring a prediction data record, dividing the prediction data record into a plurality of sub prediction data in the same way as dividing the source data set according to the data attribute field; performing prediction for each sub prediction data in each prediction data record by using the corresponding first target machine learning model corresponding to each sub prediction data, to acquire a prediction result for the each sub prediction data. Here, the prediction data record may be the data record for which the prediction needs to be performed, when predicting in real-time or predicting in batch. Referring to FIG. 4, for example, the acquired prediction data record $D_p$ is divided into four sub prediction data $D_p^1$, $D_p^2$, $D_p^3$ and $D_p^4$ in the same way as dividing the source data set, and the parameters of the first target machine learning models corresponding to $D_p^1$, $D_p^2$, $D_p^3$ and $D_p^4$ are $u_1^*$, $u_2^*$, $u_3^*$ and $u_4^*$ respectively. Then, the second target machine learning model obtaining device 140 may perform prediction for each sub prediction data by utilizing the first target machine learning model corresponding to the each sub prediction data, to acquire the prediction result for the each sub prediction data. For example, referring to FIG. 4, the prediction may be performed for the sub prediction data $D_p^1$ by utilizing the first target machine learning model of which the parameter is $u_1^*$ to obtain the prediction result $p_1$. Similarly, $p_2$, $p_3$ and $p_4$ are the prediction results obtained by utilizing the first target machine learning model of which the parameter is $u_2^*$ to perform prediction for Dp, the prediction result obtained by utilizing the first target machine learning model of which the parameter is $u_3^*$ to perform prediction for Dp, and the prediction result obtained by utilizing the first target machine learning model of which the parameter is $u_4^*$ to perform prediction for $D_p^4$, respectively. The second target machine learning model obtaining device 140 may set the rule of the second target machine learning model to: obtain a prediction result of the second target machine learning model for each prediction data record based on the acquired plurality of prediction results corresponding to the each prediction data record. For example, the prediction result of the second target machine learning model for each prediction data record may be obtained by averaging the above four prediction results corresponding to each prediction data record, but the mode of obtaining the prediction result of the second target machine learning model for each prediction data record is not limited to this, for example, the prediction result of the second target machine learning model for each prediction data record may further be obtained by the mode of voting.

As shown in FIG. 4, in the process of obtaining the first target machine learning model, all of the plurality of target data records in the target data set are utilized in the target data privacy protection mode.

FIG. 5 is a schematic diagram showing the method for carrying out the machine learning in the data privacy protection mode according to a third exemplary embodiment of the present disclosure.

The mode of obtaining a plurality of migration items regarding the source data at step S220 and the mode of obtaining a plurality of first target machine learning models at step S230 in FIG. 5 are exactly the same as those in FIG. 4, and they will not be repeated here. Different from FIG. 4, in the exemplary embodiment of FIG. 5, at step S240, the second target machine learning model may perform prediction directly for each first target data subset divided at step S230 by utilizing the first target machine learning model corresponding to the each first target data subset, to acquire the prediction result for each data record in each first target data subset, and the second target machine learning model is trained for the third target based on the set of training samples composed of the plurality of acquired prediction results corresponding to each target data record, in target data privacy protection mode. For example, referring to FIG. 5, the prediction is performed for the first target data subset $D_t^1$ by utilizing the first target machine learning model of which the parameter is $u_1^*$ to obtain the prediction result set $p_1$, wherein $p_1$ includes the prediction result of the first target machine learning model of which the parameter is $u_1^*$ for each data record in $D_t^1$. Similarly, the prediction is performed for the first target data subset $D_t^2$ by utilizing the first target machine learning model of which the parameter is $u_2^*$ to obtain the prediction result set $p_2$, the prediction is performed for the first target data subset $D_t^3$ by utilizing the first target machine learning model of which the parameter is $u_3^*$ to obtain the prediction result set $p_3$, the prediction is performed for the first target data subset $D_t^4$ by utilizing the first target machine learning model of which the parameter is $u_4^*$ to obtain the prediction result set $p_4$. In addition, for each target data record in the target data set $D_t$, there is one

prediction result in each of the prediction result sets $p_1$, $p_2$, $p_3$ and $p_4$, and these four prediction results may constitute the training samples corresponding to each target data record, and such a set of training samples may be used to train the second target machine learning model for the third prediction target under the target data privacy protection.

As shown in FIG. 5, in the process of obtaining the first target machine learning model and the process of obtaining the second target machine learning model, all of the plurality of target data records in the target data set acquired at step S210 are utilized in the target data privacy protection mode.

FIG. 6 is a schematic diagram showing the method for carrying out the machine learning in the data privacy protection mode according to a fourth exemplary embodiment of the present disclosure.

Different from FIG. 5, in the exemplary embodiment of FIG. 6, at step S230 of obtaining the first target machine learning model, instead of dividing the target data set into the plurality of first target data subsets according to the data attribute field in the same way as dividing the source data set, the first target data set (for example, $D_{t1}$ in FIG. 6) in the target data set is divided into a plurality of first target data subsets (for example, $D_{t1}^1$, $D_{t1}^2$, $D_{t1}^3$ and $D_{t1}^4$ in FIG. 6) according to the data attribute field in the same way as dividing the source data set, wherein, the first target data set may include a part of the target data records included in the target data set, and the data records in each first target data subset and the source data subset corresponding to the each first target data subset include the same data attribute fields. Then, the first target machine learning model obtaining device 130 may train, in combination with the migration item related to the source data subset corresponding to each first target data subset, the first target machine learning model corresponding to the migration item for the second prediction target based on each first target data subset, in the target data privacy protection mode. Next, different from FIG. 5, in the exemplary embodiment of FIG. 6, at step S240, the second target machine learning model obtaining device 140 does not use the exactly same target data set as the target data set used at step S230, but uses a second target data set different from the first target data set, in the process of obtaining the second target machine learning model by utilizing the plurality of first target machine learning models. Specifically, at step S240, the second target machine learning model obtaining device 140 may divide the second target data set (for example, $D_{t2}$ in FIG. 6) into a plurality of second target data subsets (for example, $D_{t2}^1$, $D_{t2}^2$, $D_{t2}^3$ and $D_{t2}^4$ in FIG. 6) according to the data attribute field in the same way as dividing the source data set. Here, the second target data set is different from the first target data set and at least includes remaining target data record excluding the first target data set from the target data set. Then, the second target machine learning model obtaining device 140 performs prediction for each second target data subset by utilizing the first target machine learning model corresponding to the each second target data subset, to acquire the prediction result for each data record in the each second target data subset, and finally, trains the second target machine learning model for the third prediction target based on the set of training samples composed of the plurality of acquired prediction results corresponding to each target data record in the target data privacy protection mode.

As shown in FIG. 6, in the process of obtaining the first target machine learning model and the process of obtaining the second target machine learning model, a part of the plurality of target data records in the target data set obtained at step S210 are utilized in the target data privacy protection mode.

In conclusion, in the process of obtaining the plurality of first target machine learning models and/or obtaining the second target machine learning model, all or a part of the plurality of target data records in the target data set are utilized in the target data privacy protection mode.

In addition, in the target data privacy protection mode mentioned in the above exemplary embodiment, an objective function for training the first target machine learning model and/or an objective function for training the second target machine learning model may be constructed to at least include a loss function and a noise term, and the privacy budget of the target data privacy protection mode may depend on the sum of and/or the greater one of the privacy budget corresponding to the noise term included in the objective function for training the first target machine learning model and the privacy budget corresponding to the noise term included in the objective function for training the second target machine learning model. Specifically, in the case that the target data set used in the process of training the first target machine learning model completely overlaps or partly overlaps with the target data set used in the process of training the second target machine learning model, the privacy budget of the target data privacy protection mode may depend on the sum of the privacy budget corresponding to the noise term included in the objective function for training the first target machine learning model and the privacy budget corresponding to the noise term included in the objective function for training the second target machine learning model. However, in the case that the target data set used in the process of training the first target machine learning model completely does not overlap with the target data set used in the process of training the second target machine learning model, the privacy budget of the target data privacy protection mode may depend on the greater one of the privacy budget corresponding to the noise term included in the objective function for training the first target machine learning model and the privacy budget corresponding to the noise term included in the objective function for training the second target machine learning model. For example, in the exemplary embodiment of FIG. 5 described above, the privacy budget of the target data privacy protection mode depends on the sum of the above two, and in the exemplary embodiment of FIG. 6, the privacy budget of the target data privacy protection mode depends on the greater one of the above two.

In addition, the source machine learning model and the first target machine learning model may belong to a same type of machine learning model, and/or the first prediction target and the second prediction target are same or similar. As an example, the same type of machine learning model is the logistic regression model. In this case, at step S230, the first target machine learning model may be trained by: constructing the objective function for training the first target machine learning model to at least include a loss function and a noise term, and reflect a difference value between the parameter of the first target machine learning model and the migration item corresponding to the first target machine learning model; and training, in combination with the migration item related to the source data subset corresponding to each first target data subset, the first target machine learning model corresponding to the migration item for the second prediction target by solving the constructed objective function, based on each first target data subset, in the target data private protection mode.

In addition, according to an exemplary embodiment, the first target machine learning model and the second target machine learning model may belong to a same type of machine learning model, and/or the second prediction target and the third prediction target may be same or similar. In addition, in the present disclosure, the second target machine learning model may be used to perform a business decision. As an example, the business decision may involve at least one of transaction anti-fraud, account opening anti-fraud, intelligent marketing, intelligent recommendation and loan appraisal, but not limited thereto.

The above described method for carrying out machine learning in the data privacy protection mode according to the exemplary embodiment of the present disclosure may not only ensure that the source data privacy and the target data privacy are not leaked, and at the same time, may migrate the knowledge on the source data set to the target data set through the plurality of migration items, furthermore, since each migration item is only used to migrate the knowledge of the corresponding part of the source data set to the target data set, the noise added for implementing the source data privacy in the process of obtaining the first target machine learning model in the source data privacy protection mode is relatively small, which may not only ensure the availability of the migrate item, but also may effectively migrating the knowledge to the target data set. Accordingly, the noise added for implementing the target data privacy protection in the process of obtaining the second target machine learning model under the target data privacy protection will be also relatively small, so that not only the target data privacy is implemented, but also the target machine learning model with a better model effect may be obtained.

It needs to be explained that although the steps in FIG. 2 are described in sequence when FIG. 2 is described above, it is clear to those skilled in the art that the steps in the above method may not be performed in sequence, but may be performed in reverse order or in parallel. For example, step S210 and step S220 described above may be performed in reverse order or in parallel, that is, the plurality of migration items regarding the source data set may be acquired before the target data set is acquired, or the target data set and the migration items may obtained at the same time. In addition, step S210 or step S220 may also be performed at the same time as step S230, that is to say, in the process of obtaining the first target machine learning model, at the same time, a new target data set or a new migration item may be acquired for a subsequent updating operation of the target machine learning model, for example. In addition, although four exemplary embodiments of the machine learning method according to the present disclosure are described above only with reference to FIGS. 3 to 6, the machine learning method according to the present disclosure may be not limited to the above exemplary embodiments, and more exemplary embodiments may be obtained by appropriate variant.

In addition, according to another exemplary embodiment of the present disclosure, a method for performing prediction by using a machine learning model with data privacy protection may be provided (the method is referred as a "prediction method" briefly for convenience of description). As an example, the prediction method may be performed by the "prediction system" described above, may also be implemented completely by computer programs or instructions in software, and may also be performed by a specifically configured computing system or computing device. For the convenience of description, it is assumed that the "prediction method" is performed by the above "prediction system", and assumed that the prediction system includes a target machine learning model acquisition device, a prediction data record acquisition device, a dividing device, and a prediction device.

Specifically, the target machine learning model acquisition device may acquire the plurality of first target machine learning models and second target machine learning model already obtained through the above steps S210 to S240 after the above described step S240. Alternatively, the target machine learning model acquisition device may also obtain the plurality of first target machine learning models and second target machine learning model by performing steps S210 to S240 by itself. The specific mode of obtaining the first target machine learning model and the second target machine learning model has been described above with reference to FIGS. 2 to 6, thus it will not be repeated here. That is, the "prediction method" here may be either a continuation of the above "machine learning method" or a completely independent prediction method.

After the plurality of first target machine learning models and second target machine learning model are acquired, the prediction data record acquisition device may acquire a prediction data record. Here, the prediction data record may include the same data attribute fields as the source data record and the target data record described previously. In addition, the prediction data record acquisition device may acquire the prediction data record one by one in real time and may acquire the prediction data record offline in batch. Next, the dividing device may divide the prediction data record into a plurality of sub prediction data. As an example, the partitioning device may divide the prediction data record into the plurality of sub prediction data according to the data attribute field in the same way as dividing the source data set described previously, and each sub prediction data may include at least one data attribute field. Then, the prediction device may perform prediction for each sub prediction data in each prediction data record by utilizing the first target machine learning model corresponding to the each sub prediction data, to acquire the prediction result for the each sub prediction data. Finally, the prediction device may input a plurality of prediction results corresponding to each prediction data record acquired by the plurality of first target machine learning models to the second target machine learning model, to obtain the prediction result for the each prediction data record.

According to the above prediction method, the prediction is performed by utilizing the plurality of first target machine learning models after dividing the prediction data records, to obtain the plurality of prediction results corresponding to each prediction data record, and the final prediction result is obtained by further utilizing the second machine learning model based on the obtained plurality of prediction results, thus the prediction effect of the model may be improved.

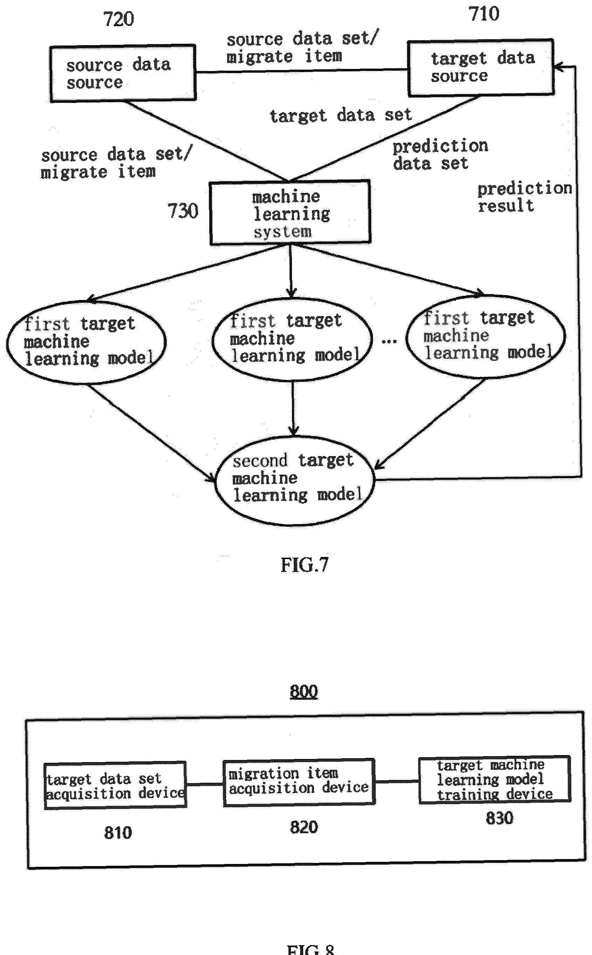

FIG. 7 is a schematic diagram showing the concept of carrying out the machine learning in the data privacy protection mode according to an exemplary embodiment of the present disclosure.

In order to understand the concept of the present disclosure more clearly and intuitively, the concept of carrying out the machine learning under the data privacy protection according to the exemplary embodiment of the present disclosure is briefly described below, by taking a loan approval scenario in the financial field (that is, the target machine learning model will be used for the business decision of the loan approval) as an example in conjunction with FIG. 7.

Nowadays, with the continuous development of machine learning, it begins to play an increasingly important role in the financial field. From loan approval to asset management, again to risk assessment and credit anti-fraud, the machine learning plays an indispensable role at many stages of a financial ecosystem. For example, a bank may decide whether to approve a loan application of a loan applicant by utilizing the machine learning. But, historical financial activities related records about the loan applicant that a single bank can obtain by itself may not fully reflect a condition of true credit or loan solvency of the loan applicant, etc. In this case, the bank may expect to obtain the historical financial activities related records of the loan applicant in other institutions. However, in consideration of the privacy protection of the customer, it is difficult for the bank to utilize the historical financial activities related records of the loan applicant owned by other institutions. However, according to utilizing the concept of the present disclosure, it may be implemented that the data of a plurality of institutions is fully utilized in the case of the privacy protection of user data to help the bank more accurately judge whether to approve the loan application of the loan applicant, thereby reducing a financial risk.

Referring to FIG. 7, a target data source 710 (for example, a first banking institution) may transmit its own target data set including a plurality of target data records involving the user's historical financial activities to a machine learning system 730. Here, each target data record may include a plurality of data attribute fields, for example, name, nationality, occupation, salary, asset, credit record, historical loan amount of the user, but not limited thereto. In addition, each target data record may also include, for example, label information about whether the user pays off the loan on time.

Here, the machine learning system 730 may be the machine learning system 100 described above with reference to FIG. 1. As an example, the machine learning system 730 may be provided by an entity that specially provides a machine learning service (for example, a machine learning service provider), or may also be constructed by the target data source 710 itself. Accordingly, the machine learning system 730 may be set in a cloud (such as a public cloud, a private cloud or a hybrid cloud), or may also be set in a local system of the banking institution. Here, for the convenience of description, it is assumed that the machine learning system 730 is set in a public cloud and constructed by the machine learning service provider.

In order to more accurately predict a loan risk index of the user or the loan solvency of the user, the first banking institution may reach a protocol of sharing data in the case of protecting the user data privacy with, for example, a source data source 720 (for example, a second institution). In this case, based on the protocol, as an example, under corresponding security measures, the source data source 720 may transmit its own source data set including a plurality of source data records to the machine learning system 730. Here, the source data set may be, for example, a data set related to the user financial activities similar to the target data set described above, and the source data record and the target data record may include the same data attribute fields. For example, the source data record may also include the plurality of data attribute fields, for example, the name, the nationality, the occupation, the salary, the asset, the credit record, the historical loan amount of the user. According to the concept of the present disclosure, the machine learning system 730 may divide the source data set into a plurality of source data subsets according to the data attribute field as described above with reference to FIGS. 1 to 6, and train a corresponding source machine learning model for the first prediction target based on each source data subset in the source data privacy protection mode, and use the parameter of each trained source machine learning model as the migration item related to each source data subset. Here, the source machine learning model may be, for example, a machine learning model for predicting the user loan risk index or loan solvency, or another machine learning model for a similar prediction target, or a machine learning model related to loan estimation business for another prediction target.

Or, the machine learning system 730 may also obtain the migration item directly from the source data source 720. In this case, for example, the source data source 720 may acquire the migration item related to each source data subset by carrying out machine learning related processing based on each source data subset obtained by dividing the source data set according to the data attribute field in the source data privacy protection mode through its own machine learning system in advance, or entrust other machine learning service providers in advance to acquire the migration item related to each source data subset by carrying out machine learning related processing based on each source data subset obtained by dividing the source data set according to the data attribute field in the source data privacy protection mode, and transmit the plurality of migration items to the machine learning system 730. Alternatively, the source data source 720 may also choose to transmit the source data set/the plurality of migration items to the target data source 710, and then the target data source 710 provides the source data set/the plurality of migration items together with the target data set to the machine learning system 730 for subsequent machine learning.

Then, the machine learning system 730 may obtain, by utilizing each migration item among the plurality of migration items respectively, a first target machine learning model corresponding to the each migration item, so as to obtain a plurality of first target machine learning models. For example, the first target machine learning model may also be a machine learning model for predicting the user loan risk index or loan solvency. Then, the machine learning system 730 may further obtain a second target machine learning model by utilizing the plurality of first target machine learning models. Descriptions of FIG. 1 to FIG. 6 may be made reference for the mode of obtaining the first target machine learning model and the second target machine learning model specifically. Here, the second target machine learning model may belong to the same type of machine learning model as the first target machine learning model. For example, the second target machine learning model may be a machine learning model used to predict the user loan risk index or loan solvency, or may be a machine learning model used to predict whether the behavior of user loan is suspected of fraud. According to the concept of the present disclosure, as described above with reference to FIGS. 1 to 6, in the process of obtaining the plurality of first target machine learning models and/or the process of obtaining the second target machine learning model, all or a part of the plurality of target data records in the target data set are utilized in the target data privacy protection mode.

After obtaining the target machine learning model (including the first target machine learning models and the second target machine learning model), the target data source 710 may transmit a prediction data set including at least one prediction data record involving at least one loan applicant to the machine learning system 730. Here, the prediction data record may include the same data attribute fields as the above-mentioned source data record and target data record, for example, may also include a plurality of data attribute fields of the name, the nationality, the occupation, the salary, the asset, the credit record, the historical loan amount of the user. The machine learning system 730 may divide the prediction data set into a plurality of prediction data subsets in the same way as dividing the source data set according to the data attribute field, and perform prediction for each prediction data subset by utilizing the first target machine learning model corresponding to the each prediction data subset, to acquire the prediction result for each data record in the each prediction data subset. Then, the machine learning system 730 may obtain a prediction result of the second target machine learning model for each prediction data record, based on a plurality of acquired prediction results corresponding to each prediction data record. Or, alternatively, the machine learning system 730 may perform prediction by utilizing the trained second target machine learning model in the target data privacy protection mode, to provide the prediction result for a prediction samples composed of the plurality of prediction results corresponding to each prediction data record. Here, the prediction result may be the loan risk index or a score for loan solvency of each loan applicant, or may be whether the loan behavior of each loan applicant is suspected of fraud. In addition, the machine learning system 730 may feedback the prediction result to the target data source 710. Subsequently, the target data source 710 may judge whether to approve the loan application proposed by the loan applicant based on the received prediction result. Through the above mode, the bank institution may obtain a more accurate judgment result by utilizing data of other institutions and their own data while the data privacy of users is protected, by utilizing machine learning, thus an unnecessary financial risk may be avoided.

It needs to be explained that although the concept of the present disclosure has been described above by taking the application of machine learning in loan estimation in the financial field as an example, it is clear to those in the art that the method and system for carrying out the machine learning under the data privacy protection according to the exemplary embodiment of the present disclosure is not limited to be applied to the financial field, and also not limited to such a business decision for performing the loan estimation. But, it may be applied to any field and business decision involving the data security and the machine learning. For example, the method and system for carrying out the machine learning under the data privacy protection according to the exemplary embodiment of the present disclosure may also be applied to the transaction anti-fraud, the account opening anti-fraud, the intelligent marketing, the intelligent recommendation, and the prediction of physiological data in a public health field.

The machine learning method and the machine learning system according to an exemplary embodiment of the present disclosure have been described above with reference to FIGS. 1 to 7. However, it should be understood that the devices and systems shown in the drawings may be configured as software, hardware, firmware or any combination of the foregoing items to perform specific functions, respectively. For example, these systems and devices may correspond to dedicated integrated circuits, may also correspond to pure software codes, and may also correspond to modules into which software and hardware are combined. In addition, one or more functions implemented by these systems or devices may also be performed uniformly by components in a physical entity device (for example, a processor, a client, a server, etc.).

In addition, the above method may be implemented by instructions recorded on a computer-readable storage medium. For example, according to an exemplary embodiment of the present application, a computer-readable storage medium for storing instructions may be provided, wherein the instructions, when executed by at least one computing device, cause the at least one computing device to perform following steps: acquiring a target data set including a plurality of target data records; acquiring a plurality of migration items regarding a source data set, wherein each migration item of the plurality of migration items is used to migrate knowledge of a corresponding part of source data set to the target data set under source data privacy protection; obtaining, by utilizing each migration item of the plurality of migration items respectively, a first target machine learning module corresponding to the each migration item, so as to obtain a plurality of first target machine learning modules; obtaining a second target machine learning model by utilizing the plurality of first target machine learning modules, wherein in a process of obtaining the plurality of first target machine learning modules and/or a process of obtaining the second target machine learning model, all or a part of the plurality of the target data records are utilized in a target data privacy protection mode.The instructions stored in the computer-readable storage medium may be executed in an environment deployed in a computer apparatus such as a client, a host, an agent device, a server, etc. It needs to be explained that the instructions may also be used to perform additional steps in addition to the above steps or to perform more specific processing when the above steps are performed, and these additional steps and the content for further processing have been mentioned in the process of describing the machine learning method with reference to FIG. 2 to FIG. 6. Therefore, in order to avoid repetition, it will not be repeated here.It needs to be explained that the machine learning system according to the exemplary embodiment of the present disclosure may implement a corresponding function by completely relying on the operation of the computer program or instructions, that is, each device corresponds to each step in the functional architecture of the computer program, so that the entire system is called through a special software package (for example, a lib Library) to implement the corresponding function.

On the other hand, when the system and device shown in FIG. 1 are implemented in software, firmware, middleware or microcode, program codes or code segments for performing a corresponding operation may be stored in the computer-readable medium such as a storage medium, so that at least one processor or at least one computing device may perform the corresponding operation by reading and executing the corresponding program codes or code segments.

For example, according to the exemplary embodiment of the present application, a system including at least one computing device and at least one storage device storing instructions may be provided, wherein the instructions, when executed by the at least one computing device, cause the at least one computing device to perform following steps: acquiring a target data set including a plurality of target data records; acquiring a plurality of migration items regarding a source data set, wherein each migration item of the plurality of migration items is used to migrate knowledge of a corresponding part of the source data set to the target data set under source data privacy protection; obtaining, by utilizing each migration item of the plurality of migration items respectively, a first target machine learning model corresponding to the each migration item , so as to obtain a plurality of first target machine learning models; obtaining a second target machine learning model by utilizing the plurality of first target machine learning models, wherein in a process of obtaining the plurality of first target machine learning models and/or a process of obtaining the second target machine learning model, all or a part of the plurality of target data records are utilized in a target data privacy protection mode.

Specifically, the above system may be deployed in the server or client, or may be deployed on a node in a distributed network environment. In addition, the system may be a PC computer, a tablet device, a personal digital assistant, a smart phone, a web application or other device capable of performing a set of the above instructions. In addition, the system may also include a video display (such as a liquid crystal display) and a user interaction interface (such as a keyboard, a mouse, a touch input device, etc.). In addition, all components of the system may be connected to each other via a bus and/or a network.

Here, the system does not have to be a single system, and may also be a collection of any device or circuit that can perform the above instructions (or the set of instructions) individually or jointly. The system may also be a part of an integrated control system or a system manager, or may be configured as a portable electronic device interfaced with local or remote (for example, via wireless transmission).

In the system, the at least one computing device may include a central processing unit (CPU), a graphics processor (GPU), a programmable logic device, a dedicated processor system, a microcontroller or a microprocessor. As an example but not a limitation, the at least one computing device may also include an analog processor, a digital processor, a microprocessor, a multi-core processor, a processor array, a network processor, etc. The computing device may execute instructions or code stored in one of the storage devices, wherein the storage devices may also store data. The instructions and the data may also be transmitted and received through the network via a network interface device, wherein the network interface device may employ any known transmission protocol.

The memory device may be integrated with the computing device, for example, a RAM or a flash memory may be disposed within an integrated circuit microprocessor, etc. In addition, the storage device may include a separate device, such as an external disk drive, a storage array, or other storage device that may be used by any database system. The storage device and the computing device may be operatively coupled, or may communicate with each other, for example, through an I / O port, a network connection, etc., so that the computing device can read instructions stored in the storage device.

FIG. 8 is a block diagram showing a system 800 for carrying out machine learning under data privacy protection according to an exemplary embodiment of the present disclosure (hereinafter, for convenience of description, referred to as a "machine learning system" for short). Referring to FIG. 8, the machine learning system 800 may include a target dataset acquisition device 810, a migration item acquisition device 820, and a target machine learning model training device 830.

Specifically, the target data set acquisition device 810 may acquire a target data set. Here, the target data set may be any data set that may be used for training of a target machine learning model, and may include a plurality of target data records and/or results of the target data records after being performed various data processing or feature processing. In addition, alternatively, the target data set may also include a label of the target data record regarding a machine learning target. For example, the target data record may include at least one data attribute field (for example, user ID, age, gender, historical credit record, etc.) reflecting various attributes of an object or an event, and the label of the target data record regarding the machine learning target may be, for example, whether a user has a capability of repaying a loan, whether the user accepts recommended content, etc., but not limited thereto. In addition, the target data set may involve various personal privacy information that the user do not expect to be known by others (for example, the user's name, ID card number, mobile phone number, total property, loan record, etc.), and may also include group related information that does not involve personal privacy. Here, the target data record may come from different data sources (for example, network operators, banking institutions, medical institutions, etc.), and the target data set may be used by a specific institution or organization in case of obtaining the authorization of the user, but the user often expects that the user' information related to the personal privacy will not be further known by other organizations or individuals. It needs to be explained that in the present disclosure, "privacy" may generally refer to any attribute involving a single individual.

As an example, the target data set acquisition device 810 may acquire the target data set from the target data source once or in batches, and may acquire the target data set manually, automatically or semi-automatically. In addition, the target data set acquisition device 810 may acquire the target data record and/or the label regarding the target data record in the target data set in real time or offline, and the target data set acquisition device 110 may simultaneously acquire the target data record and the label regarding the target data record, or the time of acquiring the label of the target data record regarding the machine learning target may lag behind the time of acquiring the target data record. In addition, the target data set acquisition device 810 may acquire the target data set from the target data source in an encrypted form or directly utilize the target data set that have been stored therein locally. If the acquired target data set is encrypted data, alternatively, the machine learning system 800 may also include a device for decrypting the target data and may also include a data processing device for processing the target data into a form suitable for the current machine learning. It needs to be explained that the present disclosure does not put limits on the type, form, content of the target data record and the label thereof in the target data set, acquisition mode of the target data set, etc., and all the data available for the machine learning that be obtained by any means may be used as the above-mentioned target data set.

However, as described in the background technology of the present disclosure, as for the machine learning in which more valuable information is expected to be mined, in practice, it is not enough to learn a machine learning model that meets an actual task requirement or achieves a predetermined effect only based on the acquired target data set. Therefore, the related information from other data sources may be tried to be acquired, so as to migrate the knowledge from other data sources to the target data set, thereby combining the target data set with the knowledge from other data sources for machine learning, and further improving the effect of machine learning model. But, the premise of migration is to ensure that: the privacy information involved in the data set of other data source (in the present disclosure, may be referred to as "source data set") is not leaked, that is, the source data needs to be privacy protected.

To this end, the migration item acquisition device 820 may acquire a migration item regarding the source data set. Here, the migration item may be used to migrate the knowledge of the source data set to the target data set in a source data privacy protection mode, to train the target machine learning model on the target data set. Specifically, the migration item may be any information related to the knowledge contained in the source data set obtained in the case of the source data is privacy protected (i.e., in the source data privacy protection mode). The present disclosure does not limit the specific content and form of the migration item, as long as it can migrate the knowledge of the source data set to the target data set in the source data privacy protection mode. For example, the migration items may involve a sample of the source data set, a feature of the source data set, a model obtained based on the source data set, an objective function for training of the model, and statistical information about the source data, etc.

As an example, the migration item acquisition device 820 may receive the migration item regarding the source data set from outside. For example, the migration item acquisition device 820 may acquire the migration item described above from an entity that owns the source data set or an entity authorized to perform related processing on the source data source (for example, a service provider that provides a machine learning related service). In this case, the migration item may be obtained by the entity that owns the source data set or the entity authorized to perform related processing on the source data source by carrying out machine learning related processing based on the source data set, and the obtained migration item may be transmitted to the migration item acquisition device 820 by these entities. Here, according to an exemplary embodiment of the present invention, the prediction target for which the machine learning related processing is performed based on the source data set and the prediction target of the target machine learning model on the target data set may be the same target (for example, both are to predict whether a transaction is a fraud transaction) or related target (for example, a classification problem with a certain degree of approximation, for example, predicting whether the transaction is the fraud transaction and predicting whether the transaction is suspected to be illegal).

Different from acquiring the migration item directly from the outside, alternatively, the migration item acquisition device 820 may also obtain the migration item regarding the source data set by carrying out machine learning related processing on the source data set. Here, the acquisition and the use of the source data set by the migration item acquisition device 820 may be authorized or protected, so that the migration item acquisition device 820 can accordingly process the acquired source data set. Specifically, the migration item acquisition device 820 may first acquire the source data set. Here, the source data set may be any data set related to the target data set. Accordingly, the above description on the composition of the target data set and the acquisition mode of the target data set are applicable to the source data set, and will not be repeated here. In addition, although the source data set is described to be acquired by the migration item acquisition device 820 for the convenience of description, it needs to be explained that the operation of acquiring the source data set may also be performed by the target data set acquisition device 810, or the above two may jointly acquire the source data set, which is not limited by the present disclosure. In addition, the acquired target data set, the source data set, and the migration item may be stored in a storage device (not shown) of the machine learning system. As an alternative, the target data, the source data or the migration item stored above may be isolated physically or with access rights, to ensure the safe use of the data.

In the case of obtaining the source data set, in consideration of the privacy protection, the machine learning system 800 cannot directly utilize the acquired source data set together with the target data set for the machine learning, but the source data may only be used for the machine learning in the case that the source data is ensured to be privacy protected. To this end, the migration item acquisition device 820 may perform machine learning related processing based on the source data set in the source data privacy protection mode, and obtain the migration item regarding the source data set in the process of carrying out the machine learning related processing based on the source data set. According to the exemplary embodiment, the source data privacy protection mode may be a protection mode conforming to the differential privacy definition, but not limited thereto, and may be any privacy protection mode able for privacy protection of the source data, which has already existed or may appear in the future.

For the convenience of understanding, the protection mode conforming to the differential privacy definition is briefly described now. Assuming that there is a random mechanism M (for example, M may be a machine learning model). For M, the probability that the outputs in the case of any two input data sets $\mathcal{D}_1$ and $\mathcal{D}_2$ that differ by only one sample are equal to t is $Pr(M(\mathcal{D}_1) = t)$ and $Pr(M(\mathcal{D}_2) = t)$, and if the following equation 1 is satisfied (where, $\varepsilon$ is a privacy protection degree constant or a privacy budget), it may be considered that M satisfies $\varepsilon$ differential privacy protection for any input.

$$\left| \ln \frac{Pr(M(\mathcal{D}_1) = t)}{Pr(M(\mathcal{D}_2) = t)} \right| \le \epsilon$$

......equation 1

In the above equation 1, the smaller the ε, the better the degree of the privacy protection, and on the contrary, the degree of the privacy protection is worse. The specific value of ε may be set accordingly according to the requirement of the user for the degree of the data privacy protection. Assuming that there is a user, for him, whether to input his personal data to mechanism M (assuming that the data set before the personal data is input is $\mathcal{D}_1$, the data set after personal data is input is $\mathcal{D}_2$, $\mathcal{D}_2$ and $\mathcal{D}_1$ differ only by the personal data) has very little effect on the output (where the effect is defined by the size of ε), then it may be considered that M plays a protective role in his privacy. Assuming ε=0, then whether the user inputs his own data to M has no effect on the output of M, so the privacy of the user is completely protected.

According to an exemplary embodiment, the source data protection mode may be to add random noise in the process of performing the machine learning related process based on the source data set. For example, the random noise may be added, so that the above differential privacy protection definition is conformed. But, it needs to be explained that the definition about the privacy protection is not only limited to such a differential privacy protection definition, but may be other definition modes about the privacy protection, for example, k-anonymization, l-diversification, t-closeness, etc.

As described above, the migration item may be any information related to the knowledge contained in the source data set obtained in the source data privacy protection mode. Specifically, according to an exemplary embodiment of the present disclosure, the migration item may involve a model parameter, an objective function, and/or statistical information about the source data obtained in the process of carrying out machine learning related processing based on the source data set, but not limited thereto. As an example, the performing of the machine learning related processing based on the source data set may include: training the source machine learning model based on the source data set in the source data privacy protection mode, but not limited thereto, and may also include machine learning related processing, for example, performing feature processing or data statistical analysis on the source data set. In addition, it needs to be explained that the above model parameter, the objective function and/or the statistical information about the source data may be the above information itself obtained directly in the process of carrying out the machine learning related processing based on the source data, and may also be the information obtained after further transforming or processing on these information. The disclosure has no limitation to this.

As an example, the migration item involving the model parameter may be the parameter of the source machine learning model, for example, the model parameter of the source machine learning model obtained in the process of training the source machine learning model under the source data protection mode satisfying the differential privacy protection definition, and in addition, may also be, for example, the statistical information of the parameter of the source machine learning model, but not limited thereto. As an example, the objective function involved in the migration item may refer to the objective function constructed for training the source machine learning model. In the case that the parameter of the source machine learning model itself is not migrated, the objective function may not be actually solved separately, but the present disclosure is not limited to this. As an example, the migration item involving statistical information about the source data may be data distribution information and/or data distribution change information about the source data acquired under the source data privacy protection mode (for example, the protection mode satisfying the differential privacy protection definition), but not limited thereto.

As described above, the migration item acquisition device 820 may train the source machine learning model based on the source data set. According to an exemplary embodiment, the source machine learning model may be, for example, a generalized linear model, for example, a logistic regression model, but not limited thereto. In addition, in the source data privacy protection mode, the migration item acquisition device 820 may construct the objective function for training the source machine learning model to at least include a loss function and a noise term. Here, the noise term may be used to add random noise in the process of training the source machine learning model, so that the privacy protection for the source data may be implemented. In addition, the objective function for training the source machine learning model may be constructed to include other constraint terms for constraining the model parameter, in addition to the loss function and the noise term, for example, may also be constructed to include a regularization term for preventing an over fitting phenomenon of the model or over complexity of the model parameter, a compensation term for the privacy protection, etc.

In order to facilitate a more intuitive understanding of the process of training the source machine learning model based on source data set in the source data privacy protection mode to obtain the migration item about the source data set, the process will be further explained below in combination with a mathematical representation. For the convenience of description, here, it is assumed that the source data privacy protection mode is a protection mode conforming to the differential privacy definition, and the source machine learning model is the generalized linear model.

Specifically, it is assumed that the source data set $\mathcal{D}_s\ =$

$$\{(\mathbf{x}_1, y_1), \cdots, (\mathbf{x}_n, y_n))\},$$

wherein $x_i$ is a sample, $y_i$ is a label of the sample, $\mathbf{x}_i \in \mathbb{R}^d$, $i \in \{1, \cdots, n\}$, wherein n is the number of samples and d is the dimension of the sample space, $\mathbb{R}^d$ is a d-dimensional sample space, then the source machine learning model is trained by utilizing the following equation 2 based on the source data set $\mathcal{D}_s$, thereby obtaining the migration item (it is the parameter of the source machine learning model in the exemplary embodiment) regarding the source data set satisfying differential privacy protection.

Specifically, before solving the parameter of the source machine learning model by utilizing equation 2, the following operations may be performed:

1. scaling the data set $\mathcal{D}$, so that $\|x_i\| \leq 1$ is satisfied for any i, wherein $\|x_i\|$ represents two-norm of $x_i$;

2. $\epsilon' = \epsilon - \log(1 + \frac{2c}{n\lambda} + \frac{c^2}{n^2\lambda^2})$, wherein c and $\lambda$ are constants, $\varepsilon$ is the privacy degree protection constant in the above equation 1;

3. if $\varepsilon' > 0$, $\Delta = 0$, otherwise, $\Delta = \dfrac{1}{n(\exp(\epsilon/4)-1)} - \lambda$ and $\varepsilon' = \varepsilon/2$;

4. sampling $\mathbf{b}$ from density function $h(\mathbf{b}) \propto e^{-\frac{\epsilon'}{2}\|\mathbf{b}\|}$, specifically, two-norm $\|\mathbf{b}\|$ of $\mathbf{b}$ may be sampled from a gamma distribution $\Gamma(d, \frac{2}{\epsilon})$, and then $\mathbf{b} = \|\mathbf{b}\|\mathbf{u}$ is obtained based on a direction $\mathbf{u}$ of $\mathbf{b}$ being sampled uniformly and randomly.

Next, the source machine learning model may be trained based on the source data set in the data privacy protection mode by utilizing equation 2, and the equation 2 is as follows:

$$\mathbf{w}^* = \arg\min_{\mathbf{w}} \frac{1}{n} \sum_{i=1}^{n} \ell(\mathbf{w}^T \mathbf{x}_i, y_i) + \lambda g(\mathbf{w}) + \frac{\mathbf{b}^T \mathbf{w}}{n} + \frac{1}{2}\Delta\|w\|^2 \qquad ......\text{equation 2}$$

In the equation 2, $\mathbf{w}$ is the parameter of the source machine learning model, $\ell(\mathbf{w}^T x_i, y_i)$ is a loss function, $g(\mathbf{w})$ is a regularization function, $\dfrac{\mathbf{b}^T \mathbf{w}}{n}$ is the noise term used to add random noise in the process of training the source machine learning model to implement the source data privacy protection, $\frac{1}{2}\Delta\|\mathbf{w}\|^2$ is a compensation term for privacy protection, and $\lambda$ is a constant for controlling regularization intensity, $\dfrac{1}{n} \sum_{i=1}^{n} \ell(\mathbf{w}^T \mathbf{x}_i, y_i) + \lambda g(\mathbf{w}) + \dfrac{\mathbf{b}^T \mathbf{w}}{n} + \dfrac{1}{2}\Delta\|w\|^2$ is the constructed objective function for training the source machine learning model. According to the above equation 2, the value of w when the value of the objective function is minimized is the finally solved parameter $\mathbf{w}^*$ of the machine learning model.

To make $\mathbf{w}^*$ solved according to the above equation 2 satisfy $\varepsilon$ differential privacy definition, the following predetermined conditions are needed to be satisfied: regularization function $g(\mathbf{w})$ needs to be a 1-strong convex function and doubly differentiable, secondly, the loss function needs to satisfy $|\ell'(z)| \leq 1$ and $|\ell''(z)| \leq c$ for all z, wherein $\ell'(z)$ and

$\ell''(z)$ are the first derivative and the second derivative of the loss function, respectively. That is to say, the parameter of the source data machine model that satisfies the differential privacy protection may be obtained by the above equation 2, as long as it's the generalized linear model that satisfies the above conditions.

For example, for the logistic regression model, its loss function $\ell(\mathbf{w}^T\mathbf{x}, y) = \log(1 + e^{-y\mathbf{w}^T\mathbf{x}})$, if let the constant

$$g(\mathbf{w}) = \frac{1}{2}\|\mathbf{w}\|^2$$

cequal to 1/4, the regularization function , the regularization function $g(\mathbf{w})$ satisfies to be a 1-strong convex function and doubly differentiable, and the loss function satisfies $|\ell'(z)| \leq 1$ and $|\ell''(z)| \leq c$ for all $z$. Therefore, when the source machine learning model is the logistic regression model, the parameter of the source machine learning model may be solved by utilizing the above equation 2, and the parameter of the source machine learning model solved in the above mode not only satisfies the privacy protection of the source data, but also carries the knowledge of the source data set. Then, the parameter of the source machine learning model may be used to migrate the knowledge of the source data set to the target data set as the migration item.

It needs to be explained that although the above process of solving the parameter of the source machine learning model is introduced by taking the generalized linear model (for example, the logistic regression model) as an example, in fact, the parameter of the source machine learning model may be solved by using equation 2 as migration items, as long as it is the linear model which satisfies the above mentioned restrictions on the regularization function and the loss function.

In the embodiment of the invention, the source data and the target data may be data from any one or a plurality of the following entities respectively:

data from a bank: such as registration information, bank transaction flow information, deposit information, financial product purchase information, bill information (image) of the user, etc;
data from an insurance institution: such as information of an insurer, information of an insurance policy, information about indemnity of the insurance, etc;
data from a medical institution: such as medical record information, diagnosis information, treatment information, etc;
data from other financial institutions such as a security company, etc., such as user registration information, financial product transaction information, financial product price fluctuation information, etc;
data from a school: such as student source information, enrolment rate, employment rate, teaching information, teacher information, etc;
data from a government department: such as social security information, human resources information, municipal resources information, municipal project related information, finance related information, education related information, etc;
data from an Internet entity: such as user registration information, user network behavior (searching, browsing, collection, purchase, click, payment, etc.) information from an e-commerce platform or an app operation entity, or related data such as an online video, an audio, a picture, a text, etc. from a search engine;
data from a telecom operator: such as mobile user communication data, fixed network or mobile network traffic related data, etc.;
data from a traditional industrial enterprise: industrial control data, such as power grid related operation data, manipulation data of a wind power generating set, manipulation data of an air conditioning system, manipulation data of a mine set, etc.

In terms of the type, the source data and the target data involved in the embodiments of the invention may be video data, image data, voice data, text data, formatted form data, etc.

After the migration item is obtained by the migration item acquisition device 820, the target machine learning model training device 830 may train, in combination with the migration item, the target machine learning model based on the target data set, in a target data privacy protection mode.

In the embodiment of the invention, the target machine learning model may be applied to any one of the following scenes:

an image processing scene including: optical character recognition OCR, face recognition, object recognition and image classification; more specifically, for example, OCR may be applied to bill (e.g. invoice) recognition, handwritten character recognition, etc., face recognition may be applied to a security and protection field, etc., object recognition may be applied to traffic sign recognition in an automatic driving scenario, and image classification may be applied to "take photos for shopping", "look for the same" of an e-commerce platform, etc.
a voice recognition scene, including a product capable for human-computer interaction through voice, such as a voice assistant of a mobile phone (such as Siri of an Apple mobile phone), an intelligent loudspeaker box, etc.;
a natural language processing scene, including: reviewing texts (such as contracts, legal documents and customer service records), spam content recognition (such as spam short message recognition) and text classification (emotion, intention and a topic, etc.);

an automatic control scene, including: prediction for a regulation operation of the mine set , prediction for a regulation operation of the wind power generating set and prediction for a regulation operation of the air conditioning system; specifically, a set of regulation operations having a high mining rate may be predicted for the mine set, a set of regulation operations having a high power generation efficiency may be predicted for the wind generating set, a set of regulation operations through which energy consumption is saved while the demand is satisfied may be predicted for the air conditioning system;

an intelligent question and answer scene, including: a chat robot and an intelligent customer service;

a business decision scene including: a financial technology field, a medical field and a municipal field, wherein:

the financial technology field includes: Marketing (such as coupon usage prediction, advertising click behavior prediction, user portrait mining, etc.) and customer acquisition, anti-fraud, anti-money laundering, underwriting and credit scoring, commodity price prediction;

the medical field includes: disease screening and prevention, personalized health management and auxiliary diagnosis;

the municipal field includes: social governance and regulatory law enforcement, resource environment and facilities management, industrial development and economic analysis, public services and livelihood security, smart city (deployment and management of various urban resources such as a bus, an online reserved car, a sharing bike, etc.);

a recommend business scene, including: recommendation of news, advertising, music, consulting, videos and financial products (such as finance management, insurances, etc.);

a search scene, including: Web search, image search, text search, video search, etc;

an abnormal behavior detection scene, including: electricity usage abnormal behavior detection of a customer of State Grid, network malicious traffic detection, abnormal behavior detection in operation log, etc.

According to the exemplary embodiment, the target data privacy protection mode may be the same as the source data privacy protection mode, for example, it may also be a protection mode conforming to the differential privacy definition, but not limited thereto. In addition, the target machine learning model may belong to the same type of machine learning model as the source machine learning model. For example, the target machine learning model may also be the generalized linear model, for example, the logistic regression model, but not limited thereto. For example, it may be any linear model that satisfies predetermined conditions. It needs to be explained that the target data privacy protection mode may also be a privacy protection mode different from the source data privacy protection mode, and the target machine learning model may also belong to a different type of machine learning model from the source machine learning model. The present application is not limited to this.

According to an exemplary embodiment, the target data privacy protection mode may be to add random noise in the process of training the target machine learning model. For example, the target machine learning model training device 820 may construct an objective function for training the target machine learning model to at least include a loss function and a noise term. Alternatively, in addition to constructing the objective function to at least include the loss function and the noise term, when the target machine learning model is trained, in combination with the migration item based on the target data set in the target data privacy protection mode, the target machine learning model training device 830 may construct the objective function for training the target machine learning model to also reflect a difference value between the parameter of the target machine learning model and the migration item, and then may train the target machine learning model by solving the constructed objective function based on the target data set. By reflecting the difference value between the parameter of the target machine learning model and the migration item in the objective function for training the target machine learning model, the knowledge in the source data set may be migrated to the target data set, so that the training process may jointly utilize the knowledge in the source data set and the target data set, and thus the effect of the trained target machine learning model is better.

In addition, according to an actual need, the objective function may also be constructed to include a regular term for preventing the over fitting phenomenon of the trained machine learning model, or may also be constructed to include other constraint term, for example, a compensation term for privacy protection, according to an actual task requirement. The present application is not limited to this, as long as the constructed objective function can effectively implement the privacy protection of the target data, and at the same time, can migrate the knowledge on the source data subset to the target data set.

Hereinafter, in order to understand the above content more intuitively, the above described process of the target machine learning model training device 830 training the target machine learning model will be further described in combination with a mathematical representation.

Here, for the convenience of description, it is assumed that the source machine learning model is the logistic regression model, the target machine learning model is the generalized linear model, and the target data privacy protection mode is the protection mode conforming to the differential privacy protection definition.

First, in the case of letting the regularization function of the source machine learning model $g_s(\mathbf{w}) = \frac{1}{2}\|\mathbf{w}\|^2$,

the parameter $\mathbf{w}_s^* = A_1(\mathcal{D}_s, \epsilon_s, \lambda_s, g_s(\cdot))$ of the source machine learning model may be solved by utilizing the process of solving the parameter of the source machine learning model described above(here, $\mathbf{w}_s^*$ is w* in the above

equation 2), wherein $A_1$ is the solution mechanism described in the above equation 2, $\mathcal{D}_s$, $\varepsilon_s$, $\lambda_s$, $g_s$ ($\cdot$) are a privacy protection degree constant that the source data set and the source data set need to satisfy, a constant which is used to control the regularization strength in the objective function used to train the source machine learning model, and the regularization function. Then, after obtaining the parameter of the source machine learning model, the regularization function in the objective function for the target machine learning model may be set as follows:

$$g_t(\mathbf{w}) = \frac{\eta}{2}\|\mathbf{w}\|^2 + \frac{1-\eta}{2}\|\mathbf{w} - \mathbf{w}_s^*\|^2 \qquad \text{......Equation 3}$$

Wherein, $0 \le \eta \le 1$. Since $g_t(\mathbf{w})$ is a 1-strong convex function and doubly differentiable and the loss function $\ell(\mathbf{w}^T x_i, y_i)$ of logistic regression model satisfies the requirement about the loss function in the above predetermined conditions. Therefore, the target machine learning model may be trained based on the target data set in the mode of satisfying the differential privacy protection definition by utilizing equation 2, by replacing $g(\mathbf{w})$ in the equation 2 with $g_t(\mathbf{w})$ and according to the process of training the source machine learning model described above, so as to solve the

parameter $\mathbf{w}_t^* = A_1(\mathcal{D}_t, \epsilon_t, \lambda_t, g_t(\cdot))$ of the target machine learning model when the objective function for the training of the target machine learning model is minimized, wherein $\mathcal{D}_t, \epsilon_t, \lambda_t, g_t(\cdot)$ are the target data set, the privacy protection degree constant that the target data set needs to satisfy, the constant that controls the regularization strength in the objective function used to train the target machine learning model, and the regularization function, respectively.

In addition, in the equation 3, since $\|\mathbf{w} - \mathbf{w}_s^*\|^2$ is contained, the objective function used for the training of the target machine learning model is constructed to reflect the difference value between the parameter of the target machine learning model and the migration item (that is, the parameter of the source machine learning model), thereby effectively implementing the migration of knowledge on the source data set to the target data set.

It needs to be explained that although the process of training the target machine learning model in the target data privacy protection mode is introduced by mainly taking the the logistic regression model as an example, it should be clear to those skilled in the art that the source machine learning model and the target machine learning model in the present disclosure are not limited to the logistic regression model, but may be for example, any linear model that satisfies the predetermined conditions as described above, or even any other appropriate model.

According to the exemplary embodiment, the trained target machine learning model may be used to perform a business decision, wherein the business decision involve at least one of transaction anti-fraud, account opening anti-fraud, intelligent marketing, intelligent recommendation and loan appraisal, but not limited thereto. For example, the trained target machine learning model may also be used for the business decision related to physiological conditions.

According to the above exemplary embodiment, the target machine learning model training device 830 may successfully migrate the knowledge in the source data set to the target data set in the case that both the source data privacy and the target data privacy are protected, so that the target machine learning model with a better model effect can be trained by synthesizing more knowledge, to be applied to the corresponding business decision.

Above, the machine learning system 800 according to the exemplary embodiment of the present application has been described with reference to FIG. 8. It needs to be explained that although the machine learning system is divided into devices for performing corresponding processing respectively (for example, the target data set acquisition device 810, the migration item acquisition device 820, the target machine learning model training device 830, it is clear to those skilled in the art that the processing performed by the above each device may be also performed in the case that the machine learning system is not divided into any specific devices or there is no clear demarcation among the devices. In addition, the machine learning system described above with reference to FIG. 8 is not limited to include the devices described above, but some other devices (for example, a prediction device, a storage device and/or a model updating device, etc.) may also be added as needed, or the above devices may also be combined.

In addition, it needs to be explained that the "machine learning" mentioned in the present disclosure may be implemented in the form of "supervised learning", "unsupervised learning" or "semi-supervised learning", and the exemplary embodiments of the present invention do not put specific limits on the specific form of the machine learning.

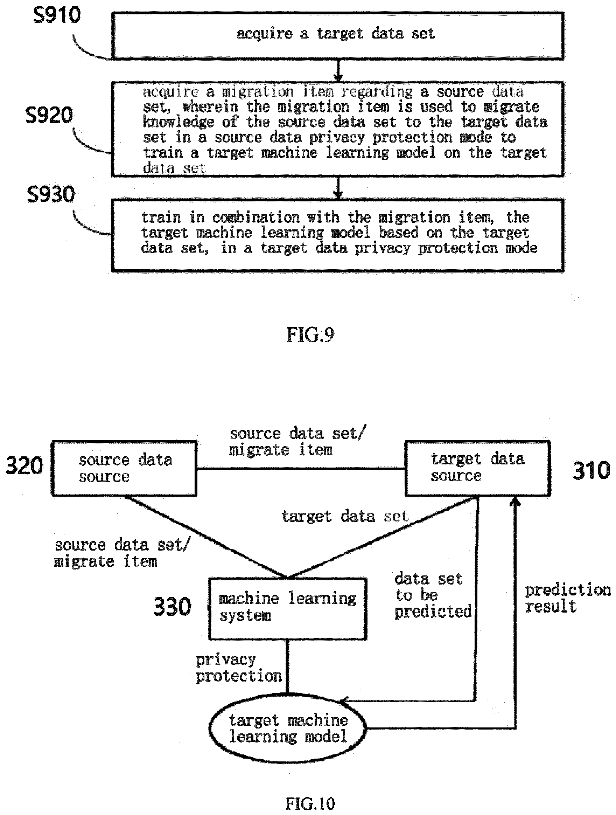

FIG. 9 is a flow chart showing a method for carrying out machine learning in a data privacy protection mode according to an exemplary embodiment of the present disclosure (hereinafter, for convenience of description, referred to as a "machine learning method" for short).

Here, as an example, the machine learning method shown in FIG. 9 may be performed by the machine learning system 800 shown in FIG. 8, may also be implemented by computer programs or instructions in software completely, and may also be performed by a specially configured computing system or computing device. For convenience of description, it is assumed that the method shown in FIG. 9 is performed by the machine learning system 800 shown in FIG. 8, and that the machine learning system 800 may have the configuration shown in FIG. 8.

Referring to FIG. 9, at step S910, the target data set acquisition device 810 may acquire a target data set. Any content related to acquiring the target data set described above when the target data set acquisition device 810 is described with reference to FIG. 8 is applicable herein, thus it will not be repeated here.

After the target data set is acquired, at step S920, the migration item acquisition device 820 may acquire a migration item regarding a source data set. Here, the migration items may be used to migrate knowledge of the source data set to the target data set in a source data privacy protection mode to train a target machine learning model on the target data set. Specifically, at step S920, the migration item acquisition device 920 may receive the migration item from outside. Or, the migration item acquisition device 820 may acquire the migration item regarding the source data set by carrying out machine learning related processing on the source data set by itself. Specifically, the migration item acquisition device 820 may first acquire the source data set, and then, perform the machine learning related processing based on the source data set in the source data privacy protection mode, and acquire the migration item regarding the source data set in the process of performing the machine learning related processing based on the source data set.

Here, as an example, the source data privacy protection mode may be a protection mode conforming to differential privacy protection definition, but not limited thereto. In addition, the source data privacy protection mode may be to add random noise in the process of carrying out machine learning related processing based on the source data set, so as to implement the privacy protection of the source data. Here, the performing of the machine learning related processing based on the source data set may include training the source machine learning model based on the source data set in the source data privacy protection mode, but not limited thereto, for example, also include performing statistical analysis or feature processing on the source data set in the source data privacy protection mode. According to an exemplary embodiment, in the source data privacy protection mode, an objective function for training the source machine learning model may be constructed to at least include a loss function and a noise term. Here, the noise term is used to add random noise in the process of training the source machine learning model, thereby implementing the source data privacy protection. In addition, alternatively, the objective function may also be constructed to include other constraint terms for constraining model parameters, in the source data privacy protection mode.

According to an exemplary embodiment, the migration item may involve a model parameter, an objective function, and/or statistical information about the source data obtained in the process of carrying out machine learning related processing based on the source data set. As an example, the migration item may be the parameter of the source machine learning model, that is, the parameter of the source machine learning model trained in the source data privacy protection mode. According to an exemplary embodiment, the source machine learning model may be a generalized linear model (for example, a logistic regression model), but not limited thereto, for example, may be any linear model satisfying predetermined conditions, or even any appropriate model satisfying certain conditions.

Since the process of the migration item acquisition device 820 training the source machine learning model based on the source data set in the source data privacy protection mode to obtain the migration item (i.e., the parameter of the source machine learning model) has been described above with reference to FIG. 8 in combination with the mathematical representation, thus it will not be repeated here. In addition, it needs to be explained that all the descriptions about the source data set, the source data privacy protection mode, the migrate item, and the objective function mentioned in the description of the migration item acquisition device 820 with reference to FIG. 8 are applicable to FIG. 9, thus they will not be repeated here, and the same or similar contents in the description of the migration item acquisition device 820 and step S920 may be referred to each other.

After the target data set and the migration item regarding the source data set areacquired, at step S930, the target machine learning model training device 830 may train the target machine learning model in combination with the migration item based on the target data set in the target data privacy protection mode. Here, as an example, the target data privacy protection mode may also be a protection mode conforming to the differential privacy definition, but not limited thereto, and may be other data privacy protection mode that is the same as or different from the source data privacy protection mode. In addition, the target data privacy protection mode may be to add random noise in the process of training the target machine learning model to implement the privacy protection of the target data. Specifically, for example, in the target data privacy protection mode, the objective function for training the target machine learning model may be constructed to at least include a loss function and a noise term, but not limited thereto, for example, the objective function may be constructed to also include other constraint terms for constraining the model, for example, a regular term for limiting the model parameter complexity or preventing the model from over fitting, a compensation item for the privacy protection, etc. In addition, the target machine learning model and the source machine learning model may belong to a machine learning model based on the same type. For example, the machine learning model of the same type may be the logistic regression, but not limited thereto, and may be for example, any linear model satisfying the predetermined conditions. It needs to be explained that the target machine learning model may also be a machine learning model different from the source machine learning model.

In addition to constructing the objective function for training the target machine learning model to at least include the loss function and the noise term in the target data privacy protection mode, according to an exemplary embodiment, at step S930, the target machine learning model training device 830 may construct the objective function for training the target machine learning model to reflect the difference value between the parameter of the target machine learning model and the migrate item, and then, may train the target machine learning model by solving the constructed objective function, based on the target data set. As for the specific process of training the target machine learning model by utilizing the constructed objective function, it has been described above with reference to FIG. 8 and thus it will not be repeated here.

The target machine learning model trained in the above mode may be used to perform a business decision. For example, the business decision may involve at least one of transaction anti-fraud, account opening anti-fraud, intelligent marketing, intelligent recommendation and loan appraisal, but not limited thereto. In fact, the present disclosure has no limitation on the type of specific business decision that the target machine learning model may be applied to, as long as it is the business suitable for making a decision by utilizing the machine learning model.

The above described method for carrying out the machine learning in the data privacy protection mode according to the exemplary embodiment of the present disclosure may not only ensure that the source data privacy and the target data privacy are not leaked, but also may migrate the knowledge of the source data to the target data set through the migrate item, so as to train the machine learning model by utilizing data of more data sources for machine learning, so that the effect of the trained target machine learning model can have a better model effect.

It needs to be explained that although the steps in FIG. 9 are described in sequence when FIG. 9 is described above, it is clear to those skilled in the art that the steps in the above method may not be performed in sequence, but may be performed in reverse order or in parallel. For example, step S910 and step S990 described above may be performed in reverse order or in parallel, that is to say, the migration item regarding the source data set may be acquired before the target data set is acquired, or the target data set and the migration item may obtained at the same time. In addition, step S910 or step S990 may also be performed at the same time as step S930, that is to say, in the process of training the target machine learning model by utilizing the acquired target data set, at the same time, a new target data set or a new migration item may be acquired for a subsequent updating operation of the target machine learning model, for example.

FIG. 10 is a schematic diagram showing the concept of carrying out the machine learning in the data privacy protection mode according to an exemplary embodiment of the present disclosure.

In order to understand the concept of the present disclosure more clearly and intuitively, the concept of carrying out the machine learning under the data privacy protection according to the exemplary embodiment of the present disclosure is briefly described below, by taking a loan approval scenario in the financial field (that is, the target machine learning model will be used for the business decision of the loan approval) as an example in conjunction with FIG. 10.

Nowadays, with the continuous development of machine learning, it begins to play an increasingly important role in the financial field. From loan approval to asset management, again to risk assessment, the machine learning plays an indispensable role at many stages of a financial ecosystem. For example, a bank may decide whether to approve a loan application of a loan applicant by utilizing the machine learning. But, historical financial activities related records about the loan applicant that a single bank can obtain by itself may not fully reflect a condition of true credit or loan solvency of the loan applicant, etc. In this case, the bank may expect to obtain the historical financial activities related records of the loan applicant in other institutions. However, in consideration of the privacy protection of the customer, it is difficult for the bank to utilize the historical financial activities related records of the loan applicant owned by other institutions. However, by utilizing the concept of the present disclosure, it may be implemented that the data of a plurality of institutions is fully utilized in the case of the privacy protection of user data to help the bank more accurately judge whether to approve the loan application of the loan applicant, thereby reducing a financial risk.

Referring to FIG. 10, a target data source 310 (for example, a first banking institution) may transmit its own a target data set involving the user historical financial activities to a machine learning system 330. Here, each target data record in the target data set may include a plurality of attribute information, for example, name, nationality, occupation, salary, asset, credit record, historical loan amount of the user, etc., but not limited thereto. In addition, the target data record may also include, for example, label information about whether the user pays off the loan on time.

Here, the machine learning system 330 may be the machine learning system 800 described above with reference to FIG. 8. As an example, the machine learning system 330 may be provided by an entity that specially provides a machine learning service (for example, a machine learning service provider), or may also be constructed by the target data source 310 by itself. Accordingly, the machine learning system 330 may be set in a cloud (such as a public cloud, a private cloud or a hybrid cloud), or may also be set in a local system of the banking institution. Here, for the convenience of description, it is assumed that the machine learning system 330 is set in the public cloud and constructed by the machine learning service provider.

In order to more accurately predict a loan risk index of the user or the loan solvency of the user, the first banking institution may reach a protocol of sharing data in the case of protecting the user data privacy with, for example, a source data source 320 (for example, a second institution). In this case, based on the protocol, as an example, under corresponding security measures, the source data source 320 may transmit its own source data set to the machine learning system 330. Here, the source data set may be, for example, a data set related to the user financial activities similar to the target data set described above. Then, the machine learning system 330 may perform the machine learning related processing based on the source data set in the source data privacy protection mode, and acquire the migration item regarding the source data set in the process of performing the machine learning processing, to migrate the knowledge on the source data set to the target data set, as described above with reference to FIGS. 8 and 9. For example, the machine learning system 330 may train the machine learning model based on the source data set, and use the parameter of the trained source machine learning model as the migration item. Here, the source machine learning model may be, for example, a machine learning model for predicting the loan risk index or loan solvency of the user, or another machine learning model for a similar prediction target, or a machine learning model related to a loan estimation business for another prediction target.

Or, the machine learning system 330 may also acquire the migration item directly from the source data source 320. In this case, for example, the source data source 320 may acquire the migration item by carrying out the machine learning related processing based on the source data set in the source data privacy protection mode through its own machine learning system in advance, or entrust other machine learning service providers in advance to acquire the migration item by carrying out the machine learning related processing based on the source data set in the source data privacy protection mode, and transmit the migration item to the machine learning system 330. Alternatively, the source data source 320 may also choose to transmit the source data set/the migration item to the target data source 310, and then the target data source 310 provides the source data set/the migration item together with the target data set to the machine learning system 330 for the machine learning.

Then, the machine learning system 330 trains, in combination with the acquired migration item, the target machine learning model based on the target data set, in the target data privacy protection mode. The target data machine learning model may be, for example, a machine learning model for predicting the loan risk index or loan solvency of the user. After the target machine learning model is trained, the target data source 310 may transmit a data set to be predicted which involves at least one loan applicant to the machine learning system 330. The machine learning system 330 may provide the loan risk index or a score for the loan solvency about each loan applicant for the data set to be predicted by utilizing the trained target machine learning model, and feed back the prediction result to the target data source 310. Subsequently, the target data source 310 may judge whether to approve the loan application proposed by the loan applicant based on the received prediction result. Through the above mode, the banking institution may obtain a more accurate judgment result by utilizing data of other institutions and its own data while the data privacy of the user is protected, by utilizing machine learning, thus an unnecessary financial risk may be avoided.

It needs to be explained that although the concept of the present disclosure has been described above by taking the application of the machine learning in loan estimation in the financial field as an example, it is clear to those in the art that the method and system for carrying out the machine learning under the data privacy protection according to the exemplary embodiment of the present disclosure is not limited to be applied to the financial field, and also not limited to such a business decision for performing the loan estimation. But, it may be applied to any filed and business decision involving the data security and the machine learning. For example, the method and system for carrying out the machine learning under the data privacy protection according to the exemplary embodiment of the present disclosure may also be applied to the transaction anti-fraud, the account opening anti-fraud, the intelligent marketing, the intelligent recommendation, etc.

As another example, the method and system for carrying out the machine learning under the data privacy protection according to the exemplary embodiments of the present disclosure may also be applied to a public health field, for example, to perform the prediction of physiological data. For example, a medical institution hopes to construct a prediction model for a certain health index, but if only the data of the medical institution is used for training, the effect of the prediction model may be not good enough. In fact, many other medical institutions may have the corresponding data, and if the data of the other medical institutions may be used, the prediction effect of the prediction model for the certain health index of the medical institution may be improved. At this time, a more accurate prediction result may be provided by synthesizing the data of each medical institution in the case that the user data privacy of each medical institution is protected, by utilizing the concept of the present disclosure.

Furthermore, the scenes to which the target model based on the present application may be applied include but not limited to the following scenes: the image processing scene, the speech recognition scene, the natural language processing scene, the automatic control scene, the intelligent question and answering scene, the business decision scene, the recommendation business scene, the search scene and the abnormal behavior detection scene. For more specific application scenes in the above scenes, please refer to the previous description.

Therefore, the method and system of the present application for carrying out the machine learning under the data privacy protection may also be applied to any of the above scenes. The method and system of the present application for carrying out the machine learning under the data privacy protection, when applied to different scenes, have no difference in the overall implementation scheme, but the data for different scenes are different. Therefore, those skilled in the art can apply the scheme of this application to different scenes without any problem based on the disclosure of the aforementioned scheme, thus there is no need to explain each scene one by one.

The machine learning method and the machine learning system according to an exemplary embodiment of the present disclosure have been described above with reference to FIGS. 8 and 9, and the concept of the disclosure is schematically described with reference to FIG. 10. However, it should be understood that the devices and systems shown in the drawings may be configured as software, hardware, firmware or any combination of the foregoing items to perform specific functions, respectively. For example, these systems and devices may correspond to dedicated integrated circuits, may also correspond to pure software codes, and may also correspond to modules into which software and hardware are combined. In addition, one or more functions implemented by these systems or devices may also be performed uniformly by components in a physical entity device (for example, a processor, a client, a server, etc.).

In addition, the above method may be implemented by instructions recorded on a computer-readable storage medium. For example, according to an exemplary embodiment of the present application, a computer-readable storage medium for storing instructions may be provided, wherein the instructions, when executed by at least one computing device, cause the at least one computing device to perform following steps: acquiring a target data set; acquiring a migration item regarding a source data set, wherein the migration item is used to migrate knowledge of the source data set to the target data set under a source data privacy protection mode to train a target machine learning module on the target data set; and training the target machine learning module in combination with the migration item based on the target data set in a target data privacy protection mode.

The instructions stored in the computer-readable storage medium may be executed in an environment deployed in a computer apparatus such as a client, a host, an agent device, a server, etc. It needs to be explained that the instructions may also be used to perform additional steps in addition to the above steps or to perform more specific processing when the above steps are performed, and these additional steps and the content for further processing have been mentioned in the process of the description of the related method with reference to FIG. 9. Therefore, in order to avoid repetition, it will not be repeated here.

It needs to be explained that the machine learning system according to the exemplary embodiment of the present disclosure may implement a corresponding function by completely relying on the operation of the computer program or instructions, that is, each device corresponds to each step in the functional architecture of the computer program, so that the entire system is called through a special software package (for example, a lib Library) to implement the corresponding function.

On the other hand, when the system and device shown in FIG. 8 are implemented in software, firmware, middleware or microcode, program codes or code segments for performing a corresponding operation may be stored in the computer-readable medium such as a storage medium, so that at least one processor or at least one computing device may perform the corresponding operation by reading and executing the corresponding program codes or code segments.

For example, according to the exemplary embodiment of the present application, a system including at least one computing device and at least one storage device storing instructions may be provided, wherein the instructions, when executed by the at least one computing device, cause the at least one computing device to perform following steps: acquiring a target data set; acquiring a migration item regarding a source data set, wherein the migration item is used to migrate knowledge of the source data set to the target data set to train a target machine learning module on the target data set; and training, in combination with the migration item, the target machine learning module based on the target data set, in a target data privacy protection mode.

Each exemplary embodiment of the present application has been described above. It should be understood that the above description is only exemplary and not exhaustive, and the present application is not limited to the disclosed exemplary embodiments. Without departing from the scope and spirit of the present application, many modifications and changes are obvious to those skilled in the art. Therefore, the protecting scope of the present application should be subject to the scope of claims.

**Claims**

1. A method for carrying out machine learning by at least one computing device under data privacy protection, comprising:

   acquiring a target data set comprising a plurality of target data records;
   acquiring a plurality of migration items regarding a source data set, wherein each migration item among the plurality of migration items is used to migrate knowledge of a corresponding part of the source data set to the target data set under source data privacy protection;
   obtaining, by utilizing each migration item among the plurality of migration items respectively, a first target machine learning model corresponding to the each migration item, so as to obtain a plurality of first target machine learning models;
   obtaining a second target machine learning model by utilizing the plurality of first target machine learning models, wherein in at least one of a process of obtaining the plurality of first target machine learning models and a process of obtaining the second target machine learning model, all or a part of the plurality of target data records are utilized in a target data privacy protection mode.

2. The method of claim 1, wherein the corresponding part of the source data set is a source data subset obtained by dividing the source data set according to a data attribute field.

3. The method of claim 1, wherein the acquiring of the plurality of migration items regarding the source data set comprises: receiving the plurality of migration items regarding the source data set from outside.

4. The method of claim 2, wherein the acquiring of the plurality of migration items regarding the source data set comprises:

   acquiring the source data set comprising a plurality of source data records, wherein the source data records and the target data records comprise the same data attribute fields;
   dividing the source data set into a plurality of source data subsets according to the data attribute field, wherein data record in each source data subset comprises at least one data attribute field;
   training a source machine learning model corresponding to each source data subset for a first prediction target based on the each source data subset in a source data privacy protection mode, and using a parameter of each trained source machine learning model as the migration item related to the each source data subset.

5. The method of claim 4, wherein the obtaining of the first target machine learning model corresponding to each migration item comprises:

   in the case of not using the target data set, using each migration item directly as the parameter of the first target machine learning model corresponding to the each migration item.

6. The method of claim 4, wherein the obtaining of the first target machine learning model corresponding to each migration item comprises:

   dividing the target data set or a first target data set into a plurality of first target data subsets in the same way as dividing the source data set, according to the data attribute field, wherein the first target data set comprises a part of the target data records comprised in the target data set, data records in each first target data subset and the source data subset corresponding to the each first target data subset comprise the same data attribute fields;
   training, in combination with the migration item related to the source data subset corresponding to each first target data subset, the first target machine learning model corresponding to the migration item for a second prediction target, based on each first target data subset, in the target data privacy protection mode.

7. The method of claim 5, wherein the obtaining of the second target machine learning model comprises:

   dividing the target data set into a plurality of target data subsets according to the data attribute field in the same way as dividing the source data set, wherein the data records in each target data subset and the source data subset corresponding to the each target data subset comprise the same data attribute fields;
   performing prediction, for each target data subset, by utilizing the first target machine learning model corresponding to the each target data subset, to acquire a prediction result for each data record in the each target data subset;

training the second target machine learning model for a third prediction target based on a set of training samples composed of a plurality of acquired prediction results corresponding to each target data record in the target data privacy protection mode.

8. The method of claim 6, wherein the obtaining of the second target machine learning model comprises:

setting a rule of the second target machine learning model to: obtain a prediction result of the second target machine learning model for each prediction data record based on a plurality of prediction results corresponding to the each prediction data record acquired by a following way comprising: acquiring the prediction data record and dividing the prediction data record into a plurality of sub prediction data according to the data attribute field in the same way as dividing the source data set; performing prediction for each sub prediction data in each prediction data record by utilizing the first target machine learning model corresponding to the each sub prediction data, to acquire a prediction result for the each sub prediction data; or

performing prediction for each first target data subset, by utilizing the first target machine learning model corresponding to the each first target data subset to acquire the prediction result for each data record in the each first target data subset; and training the second target machine learning model for the third prediction target based on a set of training samples composed of a plurality of acquired prediction results corresponding to each target data record, in the target data privacy protection mode; or

dividing a second target data set into a plurality of second target data subsets according to the data attribute field in the same way as dividing the source data set, wherein the second target data set at least comprises remaining target data records excluding the first target data set from the target data set; performing prediction for each second target data subset, by utilizing the first target machine learning model corresponding to the each second target data subset, to acquire a prediction result for each data record in the each second target data subset; training the second target machine learning model for the third prediction target based on the set of training samples composed of a plurality of acquired prediction results corresponding to each target data record in the target data privacy protection mode.

9. The method of claim 4, wherein at least one of the source data privacy protection mode and the target data privacy protection mode is a protection mode conforming to differential privacy definition.

10. The method of claim 8, wherein the method comprises at least one of:

the source data privacy protection mode is to add random noise in the process of training the source machine learning model;

the target data privacy protection mode is to add random noise in the process of obtaining at least one of the first target machine learning model and the second target machine learning model.

11. The method of claim 10, wherein the method comprises at least one of:

constructing an objective function for training the source machine learning model to at least comprise a loss function and a noise term, in the source data privacy protection mode;

constructing an objective function for training the first target machine learning model to at least comprise a loss function and a noise term, in the target data privacy protection mode;

constructing an objective function for training the second target machine learning model to at least comprise a loss function and a noise term, in the target data privacy protection mode.

12. The method of claim 11, wherein privacy budget of the target data privacy protection mode depends on the sum or the greater one of privacy budget corresponding to the noise term comprised in the objective function for training the first target machine learning model and privacy budget corresponding to the noise term comprised in the objective function for training the second target machine learning model.

13. The method of claim 11, wherein comprising at least one of:

the source machine learning model and the first target machine learning model belong to a same type of machine learning model;

the first prediction target and the second prediction target are same or similar.

14. The method of claim 13, wherein the same type of machine learning model is a logistic regression model, wherein the training of the first target machine learning model comprises: constructing the objective function for training the first target machine learning model to at least comprise the loss function and the noise term and reflect a difference value between the parameter of the first target machine learning model and the migration item corresponding to the first target machine learning model; training, in combination with the migration item related to the source data subset corresponding to each first target data subset, the first target machine learning model corresponding to the migration item for the second prediction target by solving the constructed objective function, based on the each first target data subset, in the target data privacy protection mode.

15. The method of claim 8, wherein comprising at least one of:

the first target machine learning model and the second target machine learning model belong to a same type of machine learning model;
the second prediction target and the third prediction target are same or similar.

16. The method of claim 1, wherein the second target machine learning model is used for performing a business decision, wherein the business decision involves at least one of transaction anti-fraud, account opening anti-fraud, intelligent marketing, intelligent recommendation and loan appraisal.

17. A method for performing prediction by at least one computing device utilizing a machine learning model with data privacy protection, comprising:

acquiring a plurality of first target machine learning models and a second target machine learning model of any one of claims 1 to 16;
acquiring a prediction data record;
dividing the prediction data record into a plurality of sub prediction data;
performing prediction for each sub prediction data in each prediction data record, by utilizing the first target machine learning model corresponding to the each sub prediction data, to acquire a prediction result for the each sub prediction data; and
inputting a plurality of prediction results corresponding to each prediction data record acquired by the plurality of first target machine learning models to the second target machine learning model to obtain a prediction result for the each prediction data record.

18. A computer-readable storage medium for storing instructions, when executed by at least one computing device, causing the at least one computing device to perform the method for carrying out machine learning under data privacy protection of any one of claims 1 to 16, or the method for performing prediction by utilizing machine learning model with data privacy protection of claim 17.

19. A system for carrying out machine learning under data privacy protection, comprising:

a target data set acquisition device, configured to acquire a target data set comprising a plurality of target data records;
a migration item acquisition device, configured to acquire a plurality of migration items regarding a source data set, wherein each migration item among the plurality of migration items is used to migrate knowledge of a corresponding part of the source data set to the target data set under source data privacy protection;
a first target machine learning model obtaining device configured to obtain, by utilizing each migration item among the plurality of migration items respectively, a first target machine learning model corresponding to the each migration item, so as to obtain a plurality of first target machine learning models;
a second target machine learning model obtaining device configured to obtain a second target machine learning model by utilizing the plurality of first target machine learning models,
wherein in at least one of a process of the first target machine learning model obtaining device obtaining the plurality of first target machine learning models and a process of the second target machine learning model obtaining device obtaining the second target machine learning model, all or a part of the plurality of target data records are utilized in a target data privacy protection mode.

20. A system comprising at least one computing device and at least one storage device storing instruction, wherein the instructions, when executed by the at least one computing device, cause the at least one computing device to perform following steps for carrying out machine learning under data privacy protection:

acquiring a target data set comprising a plurality of target data records;

acquiring a plurality of migration items regarding a source data set, wherein each migration item among the plurality of migration items is used to migrate knowledge of a corresponding part of the source data set to the target data set under source data privacy protection;

obtaining, by utilizing each migration item among the plurality of migration items respectively, a first target machine learning model corresponding to the each migration item, so as to obtain a plurality of first target machine learning models;

obtaining a second target machine learning model by utilizing the plurality of first target machine learning models, wherein in at least one of a process of obtaining the plurality of first target machine learning models and a process of obtaining the second target machine learning model, all or a part of the plurality of target data records are utilized in a target data privacy protection mode.

21. The system of claim 20, wherein the corresponding part of the source data set is a source data subset obtained by dividing the source data set according to a data attribute field.

22. The system of claim 20, wherein a migration item acquisition device is configured to receive the plurality of migration items regarding the source data set from outside.

23. The system of claim 21, wherein the acquiring of the plurality of migration items regarding the source data set comprises:

acquiring the source data set comprising a plurality of source data records, wherein the source data records and the target data records comprise the same data attribute fields;

dividing the source data set into a plurality of source data subsets according to the data attribute field, wherein data record in each source data subset comprises at least one data attribute field;

training a source machine learning model corresponding to each source data subset for a first prediction target based on the each source data subset in a source data privacy protection mode, and using a parameter of each trained source machine learning model as the migration item related to the each source data subset.

24. The system of claim 23, wherein the obtaining of the first target machine learning model corresponding to each migration item comprises:

in the case of not using the target data set, using each migration item directly as the parameter of the first target machine learning model corresponding to the each migration item.

25. The system of claim 23, wherein the obtaining of the first target machine learning model corresponding to each migration item comprises:

dividing the target data set or a first target data set into a plurality of first target data subsets in the same way as dividing the source data set, according to the data attribute field, wherein the first target data set comprises a part of the target data records comprised in the target data set, data records in each first target data subset and the source data subset corresponding to the each first target data subset comprise the same data attribute fields;

training, in combination with the migration item related to the source data subset corresponding to each first target data subset, the first target machine learning model corresponding to the migration item for a second prediction target, based on each first target data subset, in the target data privacy protection mode.

26. The system of claim 24, wherein the obtaining of the second target machine learning model comprises:

dividing the target data set into a plurality of target data subsets according to the data attribute field in the same way as dividing the source data set, wherein the data records in each target data subset and the source data subset corresponding to the each target data subset comprise the same data attribute fields;

performing prediction, for each target data subset, by utilizing the first target machine learning model corresponding to the each target data subset, to acquire a prediction result for each data record in the each target data subset;

training the second target machine learning model for a third prediction target based on a set of training samples composed of a plurality of acquired prediction results corresponding to each target data record in the target data privacy protection mode.

27. The system of claim 25, wherein the obtaining of the second target machine learning model comprises:

setting a rule of the second target machine learning model to: obtaining a prediction result of the second target machine learning model for each prediction data record based on a plurality of prediction results corresponding to the each prediction data record acquired by a following way comprising: acquiring the prediction data record and dividing the prediction data record into a plurality of sub prediction data according to the data attribute fields in the same way as dividing the source data set; performing prediction for each sub prediction data in each prediction data record by utilizing the first target machine learning model corresponding to the each sub prediction data, to acquire a prediction result for the each sub prediction data; or

performing prediction for each first target data subset by utilizing the first target machine learning model corresponding to the each first target data subset, to acquire a prediction result for each data record in the each first target data subset; and training the second target machine learning model for the third prediction target based on a set of training samples composed of a plurality of acquired prediction results corresponding to each target data record, in the target data privacy protection mode; or

dividing a second target data set into a plurality of second target data subsets according to the data attribute field in the same way as dividing the source data set, wherein the second target data set is different from the first target data set and at least comprises remaining target data records excluding the first target data set from the target data set; performing prediction for each second target data subset, by utilizing the first target machine learning model corresponding to the each second target data subset, to acquire a prediction result for each data record in each second target data subset; training the second target machine learning model for the third prediction target based on the set of training samples composed of a plurality of acquired prediction results corresponding to each target data record in the target data privacy protection mode.

28. The system of claim 23, wherein at least one of the source data privacy protection mode and the target data privacy protection mode is a protection mode conforming to differential privacy definition.

29. The system of claim 27, wherein comprising at least one of:

the source data privacy protection mode is to add random noise in the process of training the source machine learning model;
the target data privacy protection mode is to add random noise in the process of obtaining at least one of the first target machine learning model and the second target machine learning model.

30. The system of claim 29, wherein comprising at least one of:

a migration item acquisition device constructs an objective function for training the source machine learning model to at least comprise a loss function and a noise term, in the source data privacy protection mode;
constructing an objective function for training the first target machine learning model to at least comprise a loss function and a noise term, in the target data privacy protection mode;
constructing an objective function for training the second target machine learning model to at least comprise a loss function and a noise term, in the target data privacy protection mode.

31. The system as claimed in claim 30, wherein privacy budget of the target data privacy protection mode depends on the sum or the greater one of privacy budget corresponding to the noise term comprised in the objective function for training the first target machine learning model and privacy budget corresponding to the noise term comprised in the objective function for training the second target machine learning model.

32. The system of claim 30, wherein comprising at least one of:

the source machine learning model and the first target machine learning model belong to a same type of machine learning model;
the first prediction target and the second prediction target are same or similar.

33. The system of claim 32, wherein the same type of machine learning model is a logistic regression model, wherein the training of the first target machine learning model comprises: constructing the objective function for training the first target machine learning model to at least comprise the loss function and the noise term and reflect a difference value between the parameter of the first target machine learning model and the migration item corresponding to the first target machine learning model; training, in combination with the migration item related to the source data subset corresponding to each first target data subset, the first target machine learning model corresponding to the migration item for the second prediction target by solving the constructed objective function, based on the each first target data subset, in the target data privacy protection mode.

34. The system of claim 27, wherein comprising at least one of:

the first target machine learning model and the second target machine learning model belong to a same type of machine learning model;
the second prediction target and the third prediction target are same or similar.

35. The system of claim 20, wherein the second target machine learning model is used for performing a business decision, wherein the business decision involves at least one of transaction anti-fraud, account opening anti-fraud, intelligent marketing, intelligent recommendation and loan appraisal.

36. A system comprising at least one computing device and at least one storage device storing instructions, wherein the instructions, when executed by the at least one computing device, cause the at least one computing device to perform following steps for performing prediction by utilizing a machine learning model with data privacy protection:

acquiring a plurality of first target machine learning models and second target machine learning model of any one of claims 20 to 35;
acquiring a prediction data record;
dividing the prediction data record into a plurality of sub prediction data;
performing prediction for each sub prediction data in each prediction data record, by utilizing the first target machine learning model corresponding to the each sub prediction data, to acquire a prediction result for the each sub prediction data; and inputting a plurality of prediction results corresponding to each prediction data record acquired by the plurality of first target machine learning models to the second target machine learning model to obtain a prediction result for the each prediction data record.

37. A method for carrying out machine learning by at least one computing device under data privacy protection, comprising:

acquiring a target data set;
acquiring a migration item regarding a source data set, wherein the migration item is used to migrate knowledge of the source data set to the target data set in a source data privacy protection mode, to train a target machine learning model on the target data set; and
training, in combination with the migration item, the target machine learning model based on the target data set in a target data privacy protection mode.

38. The method of claim 37, wherein,
the acquiring of the migration item regarding the source data set comprises: receiving the migration item from outside; or,
the acquiring of the migration item regarding the source data set comprises: acquiring the source data set; performing machine learning related processing based on the source data set in the source data privacy protection mode; and acquiring the migration item regarding the source data set in a process of performing the machine learning related processing based on the source data set.

39. The method of claim 38, wherein at least one of the source data privacy protection mode and the target data privacy protection mode is a protection mode conforming to differential privacy definition.

40. The method of claim 38, wherein the migration item relates to at least one of a model parameter, an objective function and statistical information about source data obtained in the process of performing the machine learning related processing based on the source data set.

41. The method of claim 38, wherein comprising at least one of:

the source data privacy protection mode is to add random noise in the process of performing the machine learning related processing based on the source data set;
the target data privacy protection mode is to add random noise in the process of training the target machine learning model.

42. The method of claim 41, wherein the performing of the machine learning related processing based on the source data set in the source data privacy protection mode comprises: training the source machine learning model based on the source data set in the source data privacy protection mode.

43. The method of claim 42, wherein the source machine learning model and the target machine learning model belong to a same type of machine learning model.

44. The method of claim 43, wherein comprising at least one of:

constructing an objective function for training the source machine learning model to at least comprise a loss function and a noise term, in the source data privacy protection mode;
constructing an objective function for training the target machine learning model to at least comprise a loss function and a noise term, in the target data privacy protection mode.

45. The method of claim 44, wherein the same type of machine learning model is a logistic regression model, and the migration item is a parameter of the source machine learning model,
wherein the training of the target machine learning model in combination with the migration item based on the target data set in the target data privacy protection mode comprises: constructing the objective function for training the target machine learning model to further reflect a difference value between the parameter of the target machine learning model and the migration item; training the target machine learning model by solving the constructed objective function, based on the target data set.

46. The method of claim 37, wherein the target machine learning model is used for performing a business decision, wherein the business decision involves at least one of transaction anti-fraud, account opening anti-fraud, intelligent marketing, intelligent recommendation and loan appraisal.

47. A computer-readable storage medium for storing instructions, when executed by at least one computing device, causing the at least one computing device to perform the method for carrying out machine learning under data privacy protection of any one of claims 37 to 46.

48. A system for carrying out machine learning under data privacy protection, the system comprising:

a target data set acquisition device configured to acquire a target data set;
a migration item acquisition device configured to acquire a migration items regarding a source data set, wherein the migration items is used to migrate knowledge of the source data set to the target data set in source data privacy protection mode, to train a target machine learning model on the target data set; and
a target machine learning model training device configured to train the target machine learning model in combination with the migration items, based on the target data set, in a target data privacy protection mode.

49. A system comprising at least one computing device and at least one storage device storing instructions, wherein the instructions, when executed by the at least one computing device, cause the at least one computing device to perform following steps for carrying out machine learning under data privacy protection:

acquiring a target data set;
acquiring a migration item regarding a source data set, wherein the migration item is used to migrate knowledge of the source data set to the target data set in source data privacy protection mode, to train a target machine learning model on the target data set; and
training the target machine learning model in combination with the migration item based on the target data set, in a target data privacy protection mode.

50. The system of claim 49, wherein,
the acquiring of the migration item regarding the source data set comprises: receiving the migration item from outside; or,
the acquiring of the migration item regarding the source data set comprises: acquiring the source data set; performing machine learning related processing based on the source data set in the source data privacy protection mode; and acquiring the migration item regarding the source data set in a process of performing the machine learning related processing based on the source data set.

51. The system of claim 50, wherein at least one of the source data privacy protection mode and the target data privacy protection mode is a protection mode conforming to differential privacy definition.

52. The system of claim 50, wherein the migration item relates to at least one of a model parameter, an objective function and statistical information about source data obtained in the process of performing the machine learning related processing based on the source data set.

53. The system of claim 50, wherein comprising at least one of:

the source data privacy protection mode is to add random noise in the process of performing the machine learning related processing based on the source data set;
the target data privacy protection mode is to add random noise in the process of training the target machine learning model.

54. The system of claim 53, wherein the performing of the machine learning related processing based on the source data set in the source data privacy protection mode comprises: training the source machine learning model based on the source data set in the source data privacy protection mode.

55. The system as claimed in claim 54, wherein the source machine learning model and the target machine learning model belong to a same type of machine learning model.

56. The system of claim 55, wherein comprising at least one of:

a migration item acquisition device constructs an objective function for training the source machine learning model to at least comprise a loss function and a noise term, in the source data privacy protection mode;
a target machine learning model training device constructs an objective function for training the target machine learning model to at least comprise a loss function and a noise term, in the target data privacy protection mode.

57. The system of claim 56, wherein the same type of machine learning model is a logistic regression model, and the migration item is a parameter of the source machine learning model,
wherein the training of the target machine learning model in combination with the migration item based on the target data set in the target data privacy protection mode comprises: constructing the objective function for training the target machine learning model to further reflect a difference value between the parameter of the target machine learning model and the migration item; training the target machine learning model by solving the constructed objective function, based on the target data set.

58. The system of claim 49, wherein the target machine learning model is used for performing a business decision, wherein the business decision involves at least one of transaction anti-fraud, account opening anti-fraud, intelligent marketing, intelligent recommendation and loan appraisal.

100

```
┌──────────────────────────────────────────────────────────────────────────────┐
│  ┌──────────────┐   ┌──────────────┐   ┌──────────────┐   ┌──────────────────┐ │
│  │target data set│   │migration item│   │first target  │   │second target machine│
│  │acquisition   │───│acquisition   │───│machine learning│──│learning model    │ │
│  │device        │   │device        │   │model obtaining│   │obtaining device  │ │
│  │              │   │              │   │device        │   │                  │ │
│  └──────────────┘   └──────────────┘   └──────────────┘   └──────────────────┘ │
│        110               120               130                    140           │
└──────────────────────────────────────────────────────────────────────────────┘
```

FIG.1

```
S210 ─┐  ┌────────────────────────────────────────────────────────┐
      └─ │  acquire a target data set including a plurality        │
         │  of target data records                                 │
         └────────────────────────────────────────────────────────┘
                                    │
                                    ▼
S220 ─┐  ┌────────────────────────────────────────────────────────┐
      └─ │ acquire a plurality of migration items regarding a source│
         │ data set, wherein each of the plurality of migration items│
         │ is used to migrate knowledge of a corresponding part of  │
         │ the source data set to the target data set under source  │
         │ data privacy protection                                  │
         └────────────────────────────────────────────────────────┘
                                    │
                                    ▼
S230 ─┐  ┌────────────────────────────────────────────────────────┐
      └─ │  obtain, by utilizing each of the plurality of migration │
         │ items respectively to obtain a plurality of first target │
         │ machine learning models, a first target machine learning │
         │ model corresponding to the each migration item, so as to │
         │ obtain a plurality of first target machine learning      │
         │ models                                                   │
         └────────────────────────────────────────────────────────┘
                                    │
                                    ▼
S240 ─┐  ┌────────────────────────────────────────────────────────┐
      └─ │ obtain a second target machine learning model by        │
         │ utilizing the plurality of first target machine         │
         │ learning models                                         │
         └────────────────────────────────────────────────────────┘
```

FIG.2

EP 3 839 790 A1

FIG.3

FIG.4

FIG.5

FIG.6

720                                                                                    710

┌──────────────┐        source data set/        ┌──────────────┐
│ source data  │        migrate item            │ target data  │◄────
│ source       │────────────────────────────────│ source       │
└──────────────┘                                 └──────────────┘

                        target data set

source data set/                              prediction
migrate item                                  data set

                                                        prediction
                    ┌──────────────┐                    result
              730   │ machine      │
                    │ learning     │
                    │ system       │
                    └──────────────┘

    ┌───────────┐      ┌───────────┐        ┌───────────┐
    │first target│     │first target│       │first target│
    │machine    │      │machine    │  ...   │machine    │
    │learning model│   │learning model│     │learning model│
    └───────────┘      └───────────┘        └───────────┘

                    ┌───────────┐
                    │second target│
                    │machine    │
                    │learning model│
                    └───────────┘

FIG.7

800

┌────────────────────────────────────────────────────────────────────┐
│                                                                      │
│  ┌──────────────────┐   ┌──────────────────┐   ┌──────────────────┐ │
│  │target data set   │   │migration item    │   │target machine    │ │
│  │acquisition device│───│acquisition device│───│learning model    │ │
│  │                  │   │                  │   │training device   │ │
│  └──────────────────┘   └──────────────────┘   └──────────────────┘ │
│         810                    820                    830            │
│                                                                      │
└────────────────────────────────────────────────────────────────────┘

FIG.8

S910

acquire a target data set

S920

acquire a migration item regarding a source data
set, wherein the migration item is used to migrate
knowledge of the source data set to the target data
set in a source data privacy protection mode to
train a target machine learning model on the target
data set

S930

train in combination with the migration item, the
target machine learning model based on the target
data set, in a target data privacy protection mode

FIG.9

source data set/
migrate item

320  source data
     source

310  target data
     source

source data set/
migrate item

target data set

330  machine learning
     system

data set
to be
predicted

prediction
result

privacy
protection

target machine
learning model

FIG.10

## INTERNATIONAL SEARCH REPORT

| International application No. |
| --- |
| **PCT/CN2019/101441** |

| A. | CLASSIFICATION OF SUBJECT MATTER |
| --- | --- |

G06F 21/62(2013.01)i

According to International Patent Classification (IPC) or to both national classification and IPC

| B. | FIELDS SEARCHED |
| --- | --- |

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

CNPAT; CNKI; WPI; EPODOC: 保护, 隐私, 机器学习, 数据挖掘, 模型, 迁移, 数据, privacy, protect+, machine learning, model, transfer+, data, data mining, DM

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 107704930 A (ALIBABA GROUP HOLDING LIMITED) 16 February 2018 (2018-02-16)<br>    description, paragraphs [0159]-[0232] | 1-58 |
| A | CN 106791195 A (NUBIA TECHNOLOGY CO., LTD.) 31 May 2017 (2017-05-31)<br>    entire document | 1-58 |
| A | US 2016283735 A1 (INTERNATIONAL BUSINESS MACHINES CORPORATION) 29 September 2016 (2016-09-29)<br>    entire document | 1-58 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2019** | **20 November 2019** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/101441**

| Patent document cited in search report | | | Publication date (day/month/year) | Patent family member(s) | | | Publication date (day/month/year) |
|---|---|---|---|---|---|---|---|
| CN | 107704930 | A | 16 February 2018 | HK | 1249248 | A0 | 26 October 2018 |
| CN | 106791195 | A | 31 May 2017 | None | | | |
| US | 2016283735 | A1 | 29 September 2016 | US | 2016283738 | A1 | 29 September 2016 |

Form PCT/ISA/210 (patent family annex) (January 2015)